(19) Europäisches Patentamt / European Patent Office / Office européen des brevets

(11) **EP 4 480 314 A1**

(12) **EUROPEAN PATENT APPLICATION**

(43) Date of publication:
**25.12.2024 Bulletin 2024/52**

(21) Application number: **23180715.7**

(22) Date of filing: **21.06.2023**

(51) International Patent Classification (IPC):
***A01N 63/30** (2020.01)* ***A01P 5/00** (2006.01)*
***A01P 7/04** (2006.01)* ***A01N 37/36** (2006.01)*
***A01N 37/44** (2006.01)*

(52) Cooperative Patent Classification (CPC):
(C-Sets available)
**A01P 5/00; A01N 63/30; A01P 7/04** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(83) **Declaration under Rule 32(1) EPC (expert solution)**

(71) Applicant: **DANSTAR FERMENT AG**
**6300 Zug (CH)**

(72) Inventors:
- **LANVER, Daniel**
**23972 Lübow (DE)**
- **HILSCHER, Ulrike**
**23946 Ostseebad (DE)**
- **ULRICH, Julia**
**40472 Düsseldorf (DE)**
- **RAVE, Angelika**
**40764 Langenfeld (DE)**
- **TARVER, Matthew**
**St. Louis, 63141 (US)**
- **GAERTZEN, Oliver**
**50931 Köln (DE)**

(74) Representative: **J A Kemp LLP**
**80 Turnmill Street**
**London EC1M 5QU (GB)**

# (54) BENEFICIAL SALTS FOR ENHANCING BIOCONTROL EFFICACY OF FUNGAL SPORES

(57) The present invention refers to the use of salts to enhance efficacy of fungal spores and preparations comprising the same.



Processed by Luminess, 75001 PARIS (FR)

(Cont. next page)

(52) Cooperative Patent Classification (CPC): (Cont.)

C-Sets
**A01N 63/30, A01N 37/36, A01N 37/44**

## Description

### Technological field

The present disclosure relates to compositions and methods for enhancing efficacy of entomopathogenic fungal spores.

### Background

The application of entomopathogenic fungi against insect pests is an effective and sustainable approach in plant protection. However, full control with such treatments has been proven difficult to achieve, and the reached efficacy is usually lower than the efficacy of current chemical crop protection agents. It is desired to increase the efficacy of entomopathogenic fungi in order to provide more flexibility for growers to control important insect pests.

It has been previously demonstrated that supplementing spores of *C. fumosorosea* with low concentrations of acids such as citric acid and dipicolinic acid in the spray liquid increase the efficacy of this entomopathogenic fungus against white flies after spray application (PCT/EP2022/086495).

The present invention is useful for enhancing the competitiveness of biological agents or biological control agents particularly over other microbial agents. Therefore, the protection from pests (e.g. insect, nematode and/or mite pests) is enhanced.

### Summary

A first aspect of the present invention refers to a preparation comprising a salt and spores of an entomopathogenic fungus. The spores may be in a wettable powder form, wettable granule form, dispersed in an aqueous liquid or dispersed in a non-aqueous liquid, optionally oil.

The preparation serves as the basis for a composition, for example a composition which comprises water *i.e.* an aqueous formulation or suspension. Accordingly, in a second aspect the invention provides a composition comprising water, a salt, and spores of an entomopathogenic fungus, wherein the amount of salt in the composition is between 0,0001% (w/w) and 30% (w/w).

In embodiments of the first or second aspect, the salt of the preparation or composition of the invention is an aluminum salt, ammonium salt, calcium salt, ferrous salt, ferric salt, hydrogen salt, magnesium salt, potassium salt, sodium salt, chloride salt, sulfate salt, hydrogen sulfate salt, sulfite salt, hydrogen sulfite salt, carbonate salt, hydrogen carbonate salt, bicarbonate salt, acetate salt, lactic acid ion salt, hydroxide salt, phosphate salt, hydrogen phosphate salt, dihydrogen phosphate salt, nitrate salt, nitrite salt, formate salt, citrate salt, amide salt, oxalate salt, malonic acid ion salt, chloride salt, tartrate ion salt, ascorbate ion salt, glutamic acid ion salt, lysine acid ion salt, serine acid ion salt, glutamate ion salt, glutamine acid ion salt, alanine acid ion salt, phenylalanine acid ion salt, valine acid ion salt, leucine acid ion salt, isoleucine acid ion salt, histidine acid ion salt, arginine acid ion salt, tyrosine acid ion salt, threonine acid ion salt, cysteine acid ion salt, methionine acid ion salt, tryptophan acid ion salt, proline acid ion salt, selenocysteine acid ion salt, succinate ion salt, aspartic acid salt, glycolate ion salt or salycilate ion salt. In preferred embodiments the salt is an ammonium salt, a potassium salt or a glutamic acid ion salt, for example an ammonium citrate salt, potassium citrate salt or glutamic acid monosodium salt, optionally wherein the ammonium citrate salt is an ammonium citrate di-basic salt.

In some embodiments the composition or preparation additionally comprises an acid. In some embodiments the acid is an organic acid for example oxalic acid, dipicolinic acid, citric acid, trimesic acid, aconitic acid, phosphoric acid, benzoic acid, sorbic acid, acetic acid, lactic acid, ascorbic acid, glutamic acid, glycine, serine, phosphoric acid, aconitic acid, tartaric acid, succinic acid, malonic acid or malic acid.

In some embodiments the entomopathogenic fungal spores of the preparation or composition are spores of:

*Beauveria bassiana,* optionally strain ATCC 74040, strain GHA (Accession No. ATCC74250), strain ATP02 (Accession No. DSM 24665), strain PPRI 5339, strain PPRI 7315, strain R444, strains IL197, IL12, IL236, IL10, IL131, IL116, strain Bv025, strain BaGPK, strain ICPE 279, strain CG 716, strain HF23, strain ANT-03, strain NPP111B00, strain 203, strain Bb10, strain ESALQ PL63, strain IMI389521, strain IBCB 66, strain K4B1, strain K4B3, or strain CBMAI 1306; or

*Metarhizium brunneum* (formely known *as Metarhizium anisopliae*), optionally strain Cb15, strain ESALQ 1037, strain E-9, strain M206077, strain C4-B (NRRL 30905), strain ESC1, strain 15013-1 (NRRL 67073), strain 3213-1 (NRRL 67074), strain C20091, strain C20092, strain F52 (DSM3884/ ATCC 90448, IDAC Accession No. IMI 507278), strain ICIPE 78, strain ESF1, strain IBCB 425 or strain LRC112

*Cordyceps fumosorosea,* optionally strain IF-BDC01, strain FE 9901 / ARSEF 4490, strain ESALQ1296 or strain CCM 8367; or

*Cordyceps javanica,* optionally strain Apopka 97, strain GF 511 (IDAC Accession No. 080621-01), wfGA17, strain GZQ-1, strain IjH6102, strain pf185, strain pf212, strain JZ-7, or strain IJNL-N8 / CCTCC M-2017709; or *Isariafarinosa,* optionally strain ESALQ 1205.

In preferred embodiments the entomopathogenic fungal spores of the preparation or composition are spores of: *Cordyceps javanica* Apopka 97, optionally wherein the salt is an ammonium citrate salt, potassium citrate salt or glutamic acid monosodium salt; or *Cordyceps javanica* GF 511 (IDAC Accession number 080621-01), optionally wherein the salt is glutamic acid monosodium salt.

The concentration of the fungus in compositions of the invention may be between 1,0* $10^4$ spores per ml composition and 1,0* $10^9$ spores per ml. In some embodiments the preparations or compositions of the invention further comprise one or more of: one or more liquids for spore formulations, an oil, antioxidant, emulsifier, or rheology modifier, one or more other components being present in a fungal spore formulation, or one or more impurities which can be found in water.

In a third aspect the invention provides use of one or more salts (for example those described herein) for increasing the efficacy of entomopathogenic fungal spores (for example those described herein).

In a fourth aspect the invention provides a method for enhancing the efficacy of fungal spores comprising contacting spores of an entomopathogenic fungus (for example those described herein) with one or more salts (for example one or more of those described herein).

In a fifth aspect the invention provides a method for controlling insects and/or nematodes in or on a plant, for enhancing growth of a plant or for increasing plant yield or root health wherein the method comprises applying an effective amount of a preparation or composition of the invention to said plant or to a locus where plants are growing or intended to be grown.

In some embodiments the entomopathogenic fungus of the uses and methods of the invention is *Cordyceps javanica* Apopka 97 and the salt is an ammonium citrate salt, potassium citrate salt or glutamic acid monosodium salt, wherein the composition increases white fly mortality. In other embodiments the entomopathogenic fungus of the uses and methods of the invention is *Cordyceps javanica* GF 511 (IDAC Accession number 080621-01) and the salt is an ammonium citrate salt, potassium citrate salt or glutamic acid monosodium salt, wherein the composition increases white fly mortality. In some embodiments the amount of preparation or composition applied in the methods of the invention is at least 0,05 l/ha.

In a sixth embodiment the invention provides a kit comprising spores of an entomopathogenic fungus (for example as defined herein) and a salt (or example as defined herein), wherein the entomopathogenic fungi and the salt are spatially separated. In some embodiments said kit is suitable for preparation of a composition of the invention. In some embodiments said kit a description of how to prepare a composition according to the invention.

**Definition**

The term "about", whenever used in connection with the present invention, relates to the mentioned sumerical value +/- 10%.

The term "salt" as used herein refers to a chemical compound consisting of an ionic assembly of positively charged cations of a base and negatively charged anions of an acid, which results in a compound with no net electric charge. The term encompasses the use of any salt consisting of any cation, single or in combination with any other cations listed in Table A with any anion, single or in combination with any other anions listed in Table A. The term encompasses organic and inorganic salts. Non-limiting examples for salts are listed in Table A.

Table A: Example of salts:

| Cations | formulae |
|---|---|
| Aluminum | $Al^{3+}$ |
| Ammonium | $NH_4^+$ |
| Barium | $Ba^{2+}$ |
| Beryllium | $Be^{2+}$ |
| Calcium | $Ca^{2+}$ |
| Ferrous | $Fe^{2+}$ |
| Ferric | $Fe^{3+}$ |
| Hydrogen | $H^+$ |
| Lithium | $Li^+$ |

(continued)

| Cations | formulae |
|---|---|
| Magnesium | $Mg^{2+}$ |
| Manganese(II) | $Mn^{2+}$ |
| Manganese(III) | $Mn^{3+}$ |
| Potassium | $K^+$ |
| Silver | $Ag^+$ |
| Sodium | $Na^+$ |
| Tetraethylammoniu m | $(C_2H_5)_4N^+$ |
| Tin(II) | $Sn^{+2}$ |
| Tin(IV) | $Sn^{+4}$ |
| Zinc | $Zn^{+2}$ |
| | |
| **anions** | **formulae** |
| Fluoride | $F^-$ |
| Chloride | $Cl^-$ |
| Bromide | Br- |
| Sulfate | $SO_4^{2-}$ |
| Hydrogen sulfate | $HSO_4^-$ |
| Thiosulfate | $S_2O_3^{2-}$ |
| Sulfite | $SO_3^{2-}$ |
| Hydrogen Sulfite | $HSO_3^-$ |
| Carbonate | $CO_3^{2-}$ |
| Hydrogen carbonate or Bicarbonate | $HCO_3^-$ |
| Acetate | $CH_3COO^-$ |
| lactic acid ion | $CH3CH(OH)COO^-$ (either racemat, L-lactic acid ion or D-lactic acid ion) |
| Hydroxide | OH- |
| Sulfide | $S^{2-}$ |
| Nitride | $N^{3-}$ |
| Phosphate | $PO_4^{3-}$ |
| Hydrogen phosphate | $HPO_4^{2-}$ |
| Dihydrogen phosphate | $H_2PO_4^-$ |
| Nitrate | $NO_3^-$ |
| Nitrite | $NO_2^-$ |
| Iodate | $IO_3^-$ |
| formate | $HCOO^-$ |
| citrate | $C_6H_5O_7^{3-}$ |
| Amide | $NH_2^-$ |
| Peroxide | $O_2^{2-}$ |
| Oxalate | $C_2O_4^{2-}$ |
| Malonic acid ion | $C_4H_4O_4^{2-}$ |

(continued)

| anions | formulae |
|---|---|
| Chloride | $Cl^-$ |
| Tartrate ion | $C_4H_4O_6^{2-}$ |
| Ascorbate ion | $C_3H_5O_3^-$ (either racemat, L-ascorbate acid ion and D-ascorbate acid ion) |
| Glutamic acid ion | $C_5H_8NO_4^-$ (either racemat, L-glutamic acid ion and D-glutamic acid ion) |
| Lysine acid ion | $C_6H_{13}N_2O_2^-$ (either racemat, L-lysine acid ion and D-lysine acid ion) |
| Glycine acid ion | $C_2H_4NO_2^-$ |
| Serine acid ion | $C_3H_6NO_3^-$ (either racemat, L-serine acid ion and D-serine acid ion) |
| Glutamate ion | $C_5H_8NO_4^-$ (either racemat, L-glutamate ion and D-glutamate ion) |
| Glutamine acid ion | $C_5H_9N_2O_3^-$ (either racemat, L-glutamine acid ion and D-glutamine acid ion) |
| Alanine acid ion | $C_3H_6NO_2^-$ (either racemat, L-phenylalanine acid ion and D-phenylalanine acid ion) |
| Phenylalanine acid ion | $C_9H_{10}NO_2^-$ (either racemat, L-alanine acid ion and D-alanine acid ion) |
| Valine acid ion | $C_5H_{10}NO_2^-$ (either racemat, L-valine acid ion and D-valine acid ion) |
| Leucine acid ion | $C_6H_{12}NO_2^-$ (either racemat, L-leucine acid ion and D-leucine acid ion) |
| Isoleucine acid ion | $C_6H_{12}NO_2^-$ (either racemat, L-isoleucine acid ion and D-isoleucine acid ion) |
| Histidine acid ion | $C_6H_8N_3O_2^-$ (either racemat, L-histidine acid ion and D-histidine acid ion) |
| Arginine acid ion | $C_6H_{13}N_4O_2^-$ (either racemat, L-arginine acid ion and D-arginine acid ion) |
| Tyrosine acid ion | $C_9H_{10}NO_3^-$ (either racemat, L-tyrosine acid ion and D-tyrosine acid ion) |
| Threonine acid ion | $C_4H_8NO_3^-$ (either racemat, L-threonine acid ion and D-threonine acid ion) |
| Cysteine acid ion | $C_3H_6NO_2S^-$ (either racemat, L-cysteine acid ion and D-cysteine acid ion) |
| Methionine acid ion | $C_5H_{10}NO_2S^-$ (either racemat, L-methionine acid ion and D-methionine acid ion) |
| Tryptophan acid ion | $C_{11}H_{11}N_2O_2^-$ (either racemat, L-tryptophan acid ion and D-tryptophan acid ion) |
| Proline acid ion | $C_5H_8NO_2^-$ (either racemat, L-proline acid ion and D-proline acid ion) |
| Selenocysteine acid ion | $C_3H_5NO_2Se^-$ (either racemat, L-selenocysteine acid ion and D-selenocysteine acid ion) |
| Succinate ion | C4H4O4- |
| Aspartic acid | $C_4H_6NO_4^-$ (either racemat, L-aspartic acid ion and D-aspartic acid ion) |
| Glycolate ion | $C_2H_3O_3^-$ |
| Salycilate ion | $C_7HO_3^-$ |

The term "acid" as used herein refers to a chemical compound that is able to transfer protons ($H^+$) to water. As a result of the proton transfer, oxonium ions ($H_3O^+$) are formed and the pH value of an aqueous solution is lowered. The term encompasses organic and inorganic acids.

The term "inorganic acid" as used herein refers to all acids that do not contain carbon, e.g. sulfuric acid, nitric acid, phosphoric acid, hydrochloric acid, silicic acid, boric acid.

The term "organic acid" as used herein refers to carbon-containing molecules that carry functional groups that are able to transfer protons to the aqueous medium and thus lower the pH. Thus, $H_2CO_3$ (carbonic acid) is for the purpose of this invention an organic acid. Non-limiting examples for organic acids are listed in Table B:

Table B: Examples of organic acids

| CAS | Compound name | water solubility (g/l) at room temperature | COOH | pka(1) |
|---|---|---|---|---|
| 144-62-7 | Oxalic acid | 90 | 2 | 1,46 |
| 499-83-2 | Dipicolinic acid | 5 | 2 | 2,17 |
| 77-92-9 | Citric acid | 540 | 3 | 2,92 |
| 141-82-2 | Malonic acid | 763 | 2 | 2,83 |
| 6915-15-7 | Malic acid | 558 | 2 | 3,4 |
| 110-17-8 | Fumaric acid | 5 | 2 | 3,03 |
| 124-04-9 | Adipic acid | 14 | 2 | 4,43 |
| 111-16-0 | Pimelic acid | 50 | 2 | 4,71 |
| 87-69-4 | Tartaric acid | 1330 | 2 | 2,89 |
| 328-50-7 | alpha-ketoglutaric acid | 100 | 2 | 2,66 |
| 97-65-4 | Itaconic acid | 83 | 2 | 3,84 |
| 554-95-0 | Trimesic acid | 26 | 3 | 3,12 |
| 585-84-2 | Aconitic acid | 400 | 3 | 2,8 |
| 65-85-0 | Benzoic acid | 2,7 | 1 | 4,2 |
| 110-44-1 | Sorbic acid | 1,6 | 1 | 4,76 |
| 64-19-7 | Acetic acid | miscible | 1 | 4,76 |
| 79-33-4 | Lactic acid | miscible | 1 | 3,86 |
| 50-81-7 | Ascorbic acid | 333 | 1 | 4,25 |
| 56-86-0 | Glutamic acid | 7,5 | 2 | 2,1 |
| 56-87-1 | Lysine | 300 | 1 | 2,2 |
| 56-40-6 | Glycine | 250 | 1 | 2,34 |
| 56-45-1 | Serine | 25 | 1 | 2,2 |
| 56-85-9 | Glutamine | soluble | 1 | 2,17 |
| 70-47-3 | Asparagine | 29 | 1 | 2,14 |
| 56-41-7 | Alanine | 167,2 | 1 | 2,35 |
| 63-91-2 | Phenylalanine | >10 | 1 | 2,2 |
| 72-18-4 | Valine | soluble | 1 | 2,39 |
| 61-90-5 | Leucine | 22 | 1 | 2,33 |
| 73-32-5 | Isoleucine | 26 | 1 | 2,32 |
| 71-00-1 | Histidine | 42 | 1 | 1,8 |
| 74-79-3 | Arginine | 149 | 1 | 1,82 |
| 60-18-4 | Tyrosine | 0,5 | 1 | 2,2 |
| 80-68-2 | Threonine | 200 | 1 | 2,09 |
| 52-90-4 | Cysteine | soluble | 1 | 1,92 |
| 63-68-3 | Methionine | soluble | 1 | 2,13 |
| 73-22-3 | Tryptophan | 11,4 | 1 | 2,46 |
| 609-36-9 | Proline | soluble | 1 | 1,95 |
| 10236-58-5 | Selenocysteine | 400 | 1 | 1,91 |
| 6192-52-5 | p-Toluenesulfonic acid | 670 | NA | -2,8 |

(continued)

| CAS | Compound name | water solubility (g/l) at room temperature | COOH | pka(1) |
|---|---|---|---|---|
| 110-15-6 | Succinic acid | 58 | 2 | 4,2 |
| 79-10-7 | Acrylic acid | miscible | 1 | 4,26 |
| 617-45-8 (rac) | Aspartic acid | 4 | 2 | 1,99 |
| 89-00-9 | Chinolinic acid | 10 | 2 | 2,41 |
| 490-11-9 | Cinchomeronic acid | 2,3 | 2 | 2,6 |
| 499-81-0 | Dinicotinic acid | 1 | 2 | 2,82 |
| 64-18-6 | Formic Acid | miscible | 1 | 3,77 |
| 110-94-1 | Glutaric acid | 640 | 1 | 4,32 |
| 79-14-1 | Glycolic acid | miscible | 1 | 3,83 |
| 100-26-5 | Isocinchomeronic acid | 1,2 | 2 | 2,31 |
| 320-77-4 | Isocitric acid | 53 | 3 | 3,07 |
| 55-22-1 | Isonicotinic acid | 6 | 1 | 4,96 |
| 499-80-9 | Lutidinic acid | 2,5 | 2 | 2,17 |
| 110-16-7 | Maleic acid | 479 | 2 | 1,9 |
| 90-64-2 (rac) | Mandelic acid | 158 | 1 | 3,37 |
| 59-67-6 | Nicotinic acid | 18 | 1 | 4,75 |
| 88-99-3 | Phthalic acid | 1,4 | 2 | 2,95 |
| 98-98-6 | Picolinic acid | 887 | 1 | 5,39 |
| 79-09-4 | Propionic acid | miscible | 1 | 4,87 |
| 69-72-7 | Salicylic acid | 2 | 1 | 2,75 |
| 541-57-1 | Tetronic acid | soluble | 1 | 3,55 |
| 75-75-2 | Methane sulfonic acid | miscible | NA | -1,9 |

The term "at least" indicates that in any case one agent as described herein (e.g. one salt or one antioxidant, etc.) is present in a composition according to the invention. However, more than one such as (at least) two, (at least) three, (at least) four, (at least) five or even more such agents (e.g. salts, antioxidants, etc.) may be present in a composition according to the invention.

The term "antioxidants" refers to compounds which inhibit oxidation of other molecules. Whereas Applicant does not wish to be bound by any scientific theory, it is believed that a certain concentration of antioxidant in a composition contributes to a better storage stability of the formulation, in particular the long stability of the fungal spores comprised therein. An antioxidant may be any suitable antioxidant. Non-limiting examples are butylhydroxytoluol (BHT), butylhydroxyanisole (BHA), ascorbyl palmitate, tocopheryl acetate, ascorbyl stearate or the group of carotinoids (e.g. beta-carotin) or gallates (e.g. ethyl gallate, propyl gallate, octyl gallate, dodecyl gallate).

The term "comparative composition" as used herein refers to a composition with essentially the same components as a composition according to the invention with the difference that the amount (% (w/w) of acid as described herein and which is an essential part of a composition according to the invention is replaced by water. In other words, in a comparative composition, the missing amount of the salt (i.e. a value between 0,0001% (w/w) and 30% (w/w)) is replaced by water in said comparative composition, the ratios of all other components (e.g., the entomopathogenic fungus and, e.g., optionally present additives of said fungus such as oils, emulsifiers, antioxidants, rheology modifiers etc.) based on the total weight of the composition according to the invention, stay the same as in the composition according to the invention which is compared to a comparative composition.

"Increase of efficacy" in the context of the present invention means the increase of the Abbott efficacy of a composition according to the invention compared to the Abbott efficacy of a comparative composition and the Abbott efficacy of the salt in the same concentration as in the formulation according to the invention. For example, when the Abbott efficacy of a composition of the invention (AE1) is 57,0 and the Abbott efficacy of the comparative composition (AE2) is 34,3 and the Abbott efficacy of the acid (AE3) is 7,6, then the increase of efficacy is calculated as follows (AE1/(AE2+AE3)*

100)-100 = increase of efficacy: (57,0/(34,3+7,6)* 100)-100=36%.

The term "entomopathogenic fungus" as used herein refers to a fungus that can act as a parasite of insects and kills or seriously disables them. The entomopathogenic fungi include taxa from several of the main fungal groups. Non-limiting examples of entomopathogenic fungi are in the order Hypocreales of the Ascomycota: the asexual (anamorph) phases *Beauveria, Metarhizium, Cordyceps* (*Isaria, Paecilomyces*), *Hirsutella, Lecanicillium, Nomuraea* and their sexual (teleomorph) states; or are in the order Entomophthorales of the Zygomycota: *Entomophthora, Zoophthora, Pandora, Entomophaga.*

"Fungal spores" include sexually (e. g. oospores, zygospores or ascospores) and asexually (e. g. conidia and chlamydospores, but also uredospores, teleutospores, ustospores and blastospores) formed spores. Preferably the spores are conidia.

Integral values are usually given in $a^* 10^b$ format, wherein a and b can represent any number. The same information can be given by the aEb format. For example, $1,0^* 10^2$ is equal to 1,0E+02, Both refer to the value 100.

Numbers as used in the present application, if applicable, are usually written with a ",", e.g. 2,5 refers to 5/2. In case a number in the present application is written with a "." instead of a",", such a number is regarded as being written with a ",". In other words, 2.5 is equal to 2,5 is equal to 5/2; "1,000" does not mean 1000 (one thousand) but 1,000 (one); 1,0E+02 is equal to 1.0E+02 is equal to 100.

"Plant oils" or "vegetable oils" are oils derived from plant sources, as opposed to animal fats or petroleum. Among plant oils, the ones preferably used in the present invention are triglyceride-based vegetable oils which are liquid at least at room temperature, preferably also at temperatures below room temperature, such as at 15°C, at 10°C or even at 5°C or 4°C.

When referring to amounts of a component or ranges of amounts of a component, the term "%" refers to % (w/w) (weight percent) of not mentioned otherwise. The terms "% (w/w)" and "wt.-%." can be used interchangeably, herein.

The term "between a and b" as used herein (wherein a and b are numbers) means the threshold values a and b as well as all values between these the threshold values a and b.

The terms "spores/ml" and "s/ml" are used interchangeably, herein.

**Detailed description**

It was found that salts can enhance the efficacy of entomopathogenic fungi in an aqueous composition, more preferably the efficacy of spores of an entomopathogenic fungi, even more preferred the efficacy of conidia. A synergistic effect can be observed.

The present disclosure provides a method for increasing the efficacy of fungal spores comprising contacting spores of an entomopathogenic fungus with a salt wherein upon contacting the fungal spores and the salt, the fungal spores exhibit an improved efficacy in inhibiting pests or exhibiting an increased pest control compared to contacting the fungal spores to the host without the salt.

Thus, the present invention refers *inter alia* to a preparation comprising a salt and an entomopathogenic fungus, preferably spores of an entomopathogenic fungus.

The present invention further refers *inter alia* to a composition comprising water, a salt and an entomopathogenic fungus, preferably spores of an entomopathogenic fungus, wherein the amount of salt in the preparation is between 0,0001% (w/w) and 30% (w/w).

The present invention relates to a method for controlling insects and/or nematodes, preferably insects, in or on a plant, for enhancing growth of a plant or for increasing plant yield or root health comprising applying an effective amount of the preparation or composition according to the invention as described above to said plant or to a locus where plants are growing or intended to be grown. In one preferred embodiment, the method is a method wherein a synergistic preparation or composition according to the invention is applied.

In an embodiment, the preparation or the composition of the present invention may further comprise an acid. The amount of acid in the composition is between 0,0001% (w/w) and 2% (w/w), and wherein the water solubility of the acid once the composition is diluted in water is at least 1 g/l, and wherein the pH of the composition diluted in water is between 2,0 and 7,0, and wherein the pH of said composition diluted in water is lower than the pH of a comparative composition without said acid.

**Preparation**

A preparation of the invention may comprise any physical combination of entomopathogenic fungal spores and salt described herein, in any form. Optionally, the preparation of the invention may further comprise an acid described herein, in any form. The entomopathogenic fungal spores may be in a powder, for example a dry powder and/or a wettable powder. The entomopathogenic fungal spores may be granulated (in granule form), for example a wettable granule form. The entomopathogenic fungal spores may be in liquid form, for example dispersed in a solution, for example an aqueous

solution, or dispersed in a non-aqueous liquid such as oil. Accordingly, the entomopathogenic fungal spores may be dispersed in an aqueous solution, or the entomopathogenic fungal spores may be oil-dispersed. The preparation serves as the basis for the composition which is advantageously an aqueous formulation (i.e. a suspension) for application.

## Composition

In one preferred embodiment, a composition according to the invention is an aqueous formulation. For example, an aqueous formulation is a suspension (due to the presence of fungal spores).

In another preferred embodiment, the content of water in the composition according to the invention is at least 50%, more preferably at least 60% such as at least 70%, at least 80% or at least 95%, even more preferably at least 98% or even at least 99% or even at least 99,5%.

Notably, a preparation or composition according to the invention may comprise on or more further additives (e.g., as comprised in a fungal formulation) or impurities such as e.g., a solubilizing agent (e.g. polyethylenglycol) or impurities as can be found in ground-water or rain-water. Such additives may influence the pH of a composition.

## Salts

The preparation or composition of the present invention comprises at least one salt.

In an embodiment, a salt contemplated in the present invention is an aluminum salt, ammonium salt, calcium salt, ferrous salt, ferric salt, hydrogen salt, magnesium salt, potassium salt, sodium salt, chloride salt, sulfate salt, hydrogen sulfate salt, sulfite salt, hydrogen sulfite salt, carbonate salt, hydrogen carbonate salt, bicarbonate salt, acetate salt, lactic acid ion salt, hydroxide salt, phosphate salt, hydrogen phosphate salt, dihydrogen phosphate salt, nitrate salt, nitrite salt, formate salt, citrate salt, amide salt, oxalate salt, malonic acid ion salt, chloride salt, tartrate ion salt, ascorbate ion salt, glutamic acid ion salt, lysine acid ion salt, serine acid ion salt, glutamate ion salt, glutamine acid ion salt, alanine acid ion salt, phenylalanine acid ion salt, valine acid ion salt, leucine acid ion salt, isoleucine acid ion salt, histidine acid ion salt, arginine acid ion salt, tyrosine acid ion salt, threonine acid ion salt, cysteine acid ion salt, methionine acid ion salt, tryptophan acid ion salt, proline acid ion salt, selenocysteine acid ion salt, succinate ion salt, aspartic acid salt, glycolate ion salt or salycilate ion salt.

In an embodiment, the salt is an ammonium salt, a potassium salt or a glutamic acid ion salt.

In a further embodiment, a salt contemplated in the present invention is ammonium citrate salt, potassium citrate salt or glutamic acid monosodium salt. In a preferred embodiment, the ammonium citrate salt is an ammonium citrate dibasic salt.

In a preferred embodiment, the concentration range of a salt in a composition according to the invention is between 0,0001 % (w/w) and 30 % (w/w), 0,0005 % (w/w) and 25 % (w/w), 0,001 % (w/w) and 20 % (w/w), 0,005 % (w/w) and 15 % (w/w), 0,01 % (w/w) and 10 % (w/w), 0,025 % (w/w) and 5 % (w/w), 0,05 % (w/w) and 5 % (w/w), 0,05 % (w/w) and 3 % (w/w), 0,05 % (w/w) and 2 % (w/w), 0,05 % (w/w) and 1 % (w/w), 0,05 % (w/w) and 1 % (w/w) or 0,05% (w/w) and 0,5% (w/w).

For example, a composition may comprise glutamic acid monosodium salt at a concentration between 0,0001 % (w/w) and 30 % (w/w), 0,0005 % (w/w) and 25 % (w/w), 0,001 % (w/w) and 20 % (w/w), 0,005 % (w/w) and 15 % (w/w), 0,01 % (w/w) and 10 % (w/w), 0,025 % (w/w) and 5 % (w/w), 0,05 % (w/w) and 5 % (w/w), 0,05 % (w/w) and 3 % (w/w), 0,05 % (w/w) and 2 % (w/w), 0,05 % (w/w) and 1 % (w/w), 0,05 % (w/w) and 1 % (w/w) or 0,05% (w/w) and 0,5% (w/w). Preferably, a composition may comprise glutamic acid monosodium salt at a concentration between 0,05 % (w/w) and 1 % (w/w) and 0,05% (w/w) and 0,5% (w/w), for example 0,08%. Said composition may also comprise fungal spores, preferably wherein said spores are spores of *Cordyceps javanica.* For example, preferably, said composition may also comprise spores of Apopka 97, and/or said composition may also comprise spores of GF 511.

For example, a composition may comprise ammonium citrate dibasic salt at a concentration between 0,0001 % (w/w) and 30 % (w/w), 0,0005 % (w/w) and 25 % (w/w), 0,001 % (w/w) and 20 % (w/w), 0,005 % (w/w) and 15 % (w/w), 0,01 % (w/w) and 10 % (w/w), 0,025 % (w/w) and 5 % (w/w), 0,05 % (w/w) and 5 % (w/w), 0,05 % (w/w) and 3 % (w/w), 0,05 % (w/w) and 2 % (w/w), 0,05 % (w/w) and 1 % (w/w), 0,05 % (w/w) and 1 % (w/w) or 0,05% (w/w) and 0,5% (w/w). Preferably, a composition may comprise ammonium citrate dibasic salt at a concentration between 0,05 % (w/w) and 1 % (w/w) and 0,05% (w/w) and 0,5% (w/w), for example 0,06%. Said composition may also comprise fungal spores, preferably wherein said spores are spores of *Cordyceps javanica.* For example, preferably, said composition may also comprise spores of Apopka 97, and/or said composition may also comprise spores of GF 511.

For example, a composition may comprise potassium citrate salt at a concentration between 0,0001 % (w/w) and 30 % (w/w), 0,0005 % (w/w) and 25 % (w/w), 0,001 % (w/w) and 20 % (w/w), 0,005 % (w/w) and 15 % (w/w), 0,01 % (w/w) and 10 % (w/w), 0,025 % (w/w) and 5 % (w/w), 0,05 % (w/w) and 5 % (w/w), 0,05 % (w/w) and 3 % (w/w), 0,05 % (w/w) and 2 % (w/w), 0,05 % (w/w) and 1 % (w/w), 0,05 % (w/w) and 1 % (w/w) or 0,05% (w/w) and 0,5% (w/w). Preferably, a composition may comprise potassium citrate salt at a concentration between 0,05 % (w/w) and 1 % (w/w) and 0,05% (w/w)

and 0,5% (w/w), for example 0,06%. Said composition may also comprise fungal spores, preferably wherein said spores are spores of *Cordyceps javanica.* For example, preferably, said composition may also comprise spores of Apopka 97, and/or said composition may also comprise spores of GF 511.

## Acids

The preparation or composition of the present invention may further comprise an acid. In an embodiment, an acid can be an organic acid or an inorganic acid.

### *pKa*

Depending on the structure of an acid suitable for the various aspects of the invention (e.g., uses, methods and compositions), such an acid may comprise more than one $pK_a$ values. For example, lysine has three $pK_a$ values: $pK_{a,\,COOH}$ = 2,20 $pK_{a,\,\alpha\text{-}NH3}{}^{+}$ = 8,90 and $pK_{a,\,\varepsilon\text{-}NH3}{}^{+}$ = 10,28, However, due to the pH of the compositions according to the invention, the relevant $pK_a$ is a $pK_a$ between -3 and 5, i.e. the $pK_{a,\,COOH}$ (= 2,20).

### *Organic acids*

In another preferred embodiment, an acid has at least one, preferably one or two or three -COOH group(s), at least one of such an -COOH group has a $pk_a$ between -3 and 5 such as between 1 and 5 or any of the other preferred $pk_a$ ranges.

More preferably, said acid is an organic acid having the formula

$$R_1\text{-}C(=O)\text{-}OH$$

wherein $R_1$ represents

phenyl, optionally substituted with one or more substituents selected from the group consisting of $(C_1\text{-}C_4)$alkyl, $-(C_0\text{-}C_4)$alkyl-OH, $-O\text{-}R_2$, $-(C_0\text{-}C_4)$alkyl-$(NR_3R_4)$;

pyridyl, optionally substituted with one or more substituents selected from the group consisting of Ci-$C_4$ alkyl, -OH, $-O\text{-}R_2$, $-(NR_3R_4)$, -COOH, and $-C(=O)\text{-}(NR_3R_4)$; or

a linear or branched $C_1\text{-}C_{12}$ alkyl group which optionally can be substituted with one or more additional substituents selected from the group consisting of phenyl, 2-pyridyl, -OH, -O-Rz, $-(NR_3R_4)$, -C(O)OH, $-O\text{-}S(=O)_2OH$, $-S(=O)_2OH$, and $-C(=O)(NR_3R_4)$;

wherein $R_2$ represents $C_1\text{-}C_4$ alkyl; and

wherein $R_3$ and $R_4$ independently from each other represent -H or $C_1\text{-}C_4$ alkyl), $-(C_0\text{-}C_4)$alkyl-COOH, and $-(C_0\text{-}C_4)$alkyl-$C(=O)\text{-}(NR_3R_4)$.

In a preferred embodiment, said acid is an organic acid having the formula

$$R_1\text{-}C(=O)\text{-}OH$$

wherein $R_1$ represents a linear or branched $C_1\text{-}C_{12}$ alkyl group which optionally can be substituted with one or more additional substituents selected from the group consisting of phenyl, 2-pyridyl, -OH, $-OR_2$, $-(NR_3R_4)$, -C(O)OH, $-O\text{-}S(=O)_2OH$, $-S(=O)_2OH$, and $-C(=O)(NR_3R_4)$.

### *Organic sulfuric acids*

In another preferred embodiment, an acid, has at least one, preferably one, $-O\text{-}S(=O)_2OH$ group with a $pk_a$ between -3 and 5 or the other preferred $pk_a$ ranges.

More preferably, said acid is an organic acid having the formula

$$R_5\text{-}O\text{-}S(=O)_2OH$$

wherein $R_5$ represents

phenyl, optionally substituted with one or more substituents selected from the group consisting of (Ci-$C_4$)alkyl, -($C_0$-$C_4$)alkyl-OH, -O-$R_2$, -($NR_3R_4$), -($C_0$-$C_4$)alkyl-COOH, and -($C_0$-$C_4$)alkyl-C(=O)($NR_3R_4$);

a linear or branched $C_1$-$C_{12}$ alkyl group which optionally can be substituted with one or more additional groups selected from the group consisting of -OH, -O-$R_2$, -C(O)OH, and -C(=O)($NR_3R_4$);

wherein $R_3$ and $R_4$ independently from each other represent -H or $C_1$-$C_4$ alkyl), -($C_0$-$C_4$)alkyl-COOH, and -($C_0$-$C_4$) alkyl-C(=O)-($NR_3R_4$);
or

$R_5$ represents a residue of formula

$$R_6\text{-O-}[CH_2\text{-}CH(CH_3)O\text{-}]_x\text{-}[CH_2\text{-}CH_2\text{-}O\text{-}]_y\text{-}$$

wherein x and y are independently from each other 1 (one) or greater than 1 (one), e.g. between 1 and 8 or between 1 and 5, and wherein $R_6$ is a linear or branched ($C_1$-$C_8$)Alkyl.

In a more preferred embodiment, said acid is an organic acid having the formula

$$R_5\text{-O-S(=O)}_2\text{OH}$$

wherein $R_5$ represents a linear or branched $C_1$-$C_{12}$ alkyl group which optionally can be substituted with one or more additional groups selected from the group consisting of -OH, -O-$R_2$, -C(O)OH, and - C(=O)($NR_3R_4$).

***Organic sulfonic acid***

In another preferred embodiment, an acid, has a -S(=O)$_2$OH group with a p$k_a$ between -3 and 5 or the other preferred p$k_a$ ranges.

More preferably, said acid is an organic acid having the formula

$$R_5\text{-S(=O)}_2\text{OH}$$

wherein $R_5$ is as defined above.

***Organic phosphates***

In another preferred embodiment, an acid, preferably an organic acid, has a -O-P(=O)(OH)$_2$ group with a p$k_a$ between -1 and 5 or the other preferred p$k_a$ ranges.

More preferably, said acid is an organic acid having the formula

Rs-O-P(=O)(OH)z

wherein $R_5$ is as defined above.

***Organic phosphonates***

In another preferred embodiment, an acid, preferably an organic acid, has a -P(=O)(OH)$_2$ group with a p$k_a$ between 1 and 5 or the other preferred p$k_a$ ranges.

More preferably, said acid is an organic acid having the formula

$$R_5\text{-P(=O)(OH)}_2$$

wherein $R_5$ is independently from each other as defined above.

***Concentration range***

One parameter that influences the pH value which is adjusted by the respective acid is the concentration of said acid in the final composition.

In a preferred embodiment, the concentration range of an acid in a composition according to the invention is between 0,0001 % (w/w) and 2 % (w/w), preferably between 0,00025 % (w/w) and 0,5 % (w/w) such as between 0,005 % (w/w) and 0,5 % (w/w), preferably between 0,001 % (w/w) and 0,25 % (w/w) such as between 0,01 % (w/w) and 0,25 % (w/w), more preferably between 0,0025% and 0,20% such as between 0,05 % (w/w) and 0,2 % (w/w).

***pH range***

In a preferred embodiment, an acid suitable for the various aspects of the present invention results in a pH of the composition between 2,5 and 6,5 at 25 °C and 1013 hPa, more preferably between 3,0 and 6,5 at 25 °C and 1013 hPa, even more preferably between 3,0 and 6,0 at 25 °C and 1013 hPa.

In yet another preferred embodiment, an acid suitable for the various aspects of the present invention is present in a composition according to the invention in an amount between 0,005 % (w/w) and 0,5 % (w/w) and the pH of the composition is between pH 3,0 and pH 6,0 at 25 °C and 1013 hPa.

In yet another preferred embodiment, an acid suitable for the various aspects of the present invention is present in a composition according to the invention in an amount between 0,01 % (w/w) and 0,25 % (w/w) and the pH of the composition is between pH 3,0 and pH 6,0 at 25 °C and 1013 hPa.

In yet another preferred embodiment, an acid suitable for the various aspects of the present invention is present in a composition according to the invention in an amount between 0,05 % (w/w) and 0,2 % (w/w) and the pH of the composition is between pH 3,0 and pH 6,0 at 25 °C and 1013 hPa

The pH can be measured using a laboratory pH meter (e.g. a Knick 766 Laboratory pH Meter).

***Water solubility***

In one embodiment, the acid suitable for the various aspects of the invention is sufficiently water soluble. More specific for the context of this invention, sufficient solubility in water at 25 °C and 1013 hPa is 1 g/l (gram/liter) or more, preferably 2 g/l or more, and more preferably 5 g/l or more, e.g. 50 g/l or more, 100 g/l or more or even 250 g/l or more. In one embodiment, the acid is completely miscible with water.

***Preferred acids***

In one preferred embodiment, an acid is an organic acid having a water solubility of at least 1 g/l.

In one preferred embodiment, an acid is selected from the group consisting of sulfuric acid, nitric acid, phosphoric acid, hydrochloric acid, boric acid, oxalic acid, dipicolinic acid, citric acid, malonic acid, malic acid, fumaric acid, adipic acid, pimelic acid, tartaric acid, alpha-ketoglutaric acid, itaconic acid, trimesic acid, aconitic acid, benzoic acid, sorbic acid, acetic acid, lactic acid, ascorbic acid, glutamic acid, glycine, serine, asparagine, alanine, phenylalanine, valine, leucine, isoleucine, histidine, arginine, tyrosine, threonine, cysteine, methionine, tryptophan, proline, selenocysteine, p-toluenesulfonic acid, succinic acid, acrylic acid, aspartic acid, chinolinic acid, cinchomeronic acid, dinicotinic acid, formic acid, glutaric acid, glycolic acid, isocinchomeronic acid, isocitric acid, isonicotinic acid, lutidinic acid, maleic acid, mandelic acid, nicotinic acid, phtalic acid, picolinic acid, propionic acid, salicylic acid, tetronic acid, methane sulfonic acid.

In another preferred embodiment, an acid is an acid selected from the acids listed in Table A having a -COOH group with a $pk_a$ value between 1 and 5, In one preferred embodiment, an acid is selected from the group consisting of oxalic acid, dipicolinic acid, citric acid, malonic acid, malic acid, fumaric acid, adipic acid, pimelic acid, tartaric acid, alpha-ketoglutaric acid, itaconic acid, trimesic acid, aconitic acid, benzoic acid, sorbic acid, acetic acid, lactic acid, ascorbic acid, glutamic acid, glycine, serine, asparagine, alanine, phenylalanine, valine, leucine, isoleucine, histidine, arginine, tyrosine, threonine, cysteine, methionine, tryptophan, proline, selenocysteine, aspartic acid, chinolinic acid, cinchomeronic acid, dinicotinic acid, isocinchomeronic acid, isocitric acid, isonicotinic acid, lutidinic acid, maleic acid, mandelic acid, nicotinic acid, phtalic acid, propionic acid, salicylic acid, and tetronic acid.

In another preferred embodiment, an acid is an organic acid selected from the acids listed in Table A having a -COOH group with a $pk_a$ value between 1 and 3, In one preferred embodiment, an organic acid is selected from the group consisting of oxalic acid, dipicolinic acid, citric acid, malonic acid, tartaric acid, alpha-ketoglutaric acid, aconitic acid, glutamic acid, glycine, serine, asparagine, alanine, phenylalanine, valine, leucine, isoleucine, histidine, arginine, tyrosine, threonine, cysteine, methionine, tryptophan, proline, selenocysteine, succinic acid, acrylic acid, aspartic acid, chinolinic acid, cinchomeronic acid, dinicotinic acid, formic acid, glutaric acid, glycolic acid, Isocinchomeronic acid, lutidinic acid, maleic acid, phtalic acid, and salicylic acid.

In another preferred embodiment, an acid is an organic acid selected from the acids listed in Table A having a -COOH group with a $pk_a$ value between 2 and 3, In one preferred embodiment, an organic acid is selected from the group consisting of dipicolinic acid, citric acid, malonic acid, tartaric acid, alpha-ketoglutaric acid, aconitic acid, glutamic acid, glycine, serine, asparagine, alanine, phenylalanine, valine, leucine, isoleucine, tyrosine, threonine, methionine, tryptophan, selenocysteine, succinic acid, acrylic acid, aspartic acid, chinolinic acid, cinchomeronic acid, dinicotinic acid, formic acid, glutaric acid, glycolic acid, Isocinchomeronic acid, lutidinic acid, maleic acid, phtalic acid, and salicylic acid.

In another preferred embodiment, an organic acid is an organic acid selected from the acids listed in Table A having a -COOH group with a $pk_a$ value between above 3 and 5, In one preferred embodiment, an organic acid is selected from the group consisting of malic acid, fumaric acid, adipic acid, pimelic acid, itaconic acid, trimesic acid, benzoic acid, sorbic acid, acetic acid, lactic acid, ascorbic acid, succinic acid, acrylic acid, glutaric acid, glycolic acid, isocitric acid, isonicotinic acid, mandelic acid, nicotinic acid, picolinic acid, propionic acid, and tetronic acid.

In another preferred embodiment, an acid is an organic acid selected from the acids listed in Table A having a -COOH group with a $pk_a$ value between above 4 and 5, In one preferred embodiment, an organic acid is selected from the group consisting of adipic acid, pimelic acid, benzoic acid, sorbic acid, acetic acid, ascorbic acid, succinic acid, acrylic acid, glutaric acid, isonicotinic acid, nicotinic acid, and propionic acid.

In another preferred embodiment, an acid is an acid selected from the acids listed in Table A having a $pk_a$ value between -3 and -1. In one preferred embodiment, an organic acid is selected from the group consisting of p-toluenesulfonic acid, and methane sulfonic acid.

In one preferred embodiment, the acid is sulfuric acid. In another preferred embodiment, the acid is nitric acid. In another preferred embodiment, the acid is phosphoric acid. In another preferred embodiment, the acid is hydrochloric acid. In another preferred embodiment, the acid is boric acid.

In another preferred embodiment, the acid is oxalic acid. In another preferred embodiment, the acid is dipicolinic acid. In another preferred embodiment, the acid is citric acid. In another preferred embodiment, the acid is malonic acid. In another preferred embodiment, the acid is malic acid. In another preferred embodiment, the acid is fumaric acid. In another preferred embodiment, the acid is adipic acid. In another preferred embodiment, the acid is pimelic acid. In another preferred embodiment, the acid is tartaric acid. In another preferred embodiment, the acid is alpha-ketoglutaric acid. In another preferred embodiment, the acid is itaconic acid. In another preferred embodiment, the acid is trimesic acid. In another preferred embodiment, the acid is aconitic acid. In another preferred embodiment, the acid is benzoic acid. In another preferred embodiment, the acid is sorbic acid. In another preferred embodiment, the acid is acetic acid. In another preferred embodiment, the acid is lactic acid. In another preferred embodiment, the acid is ascorbic acid. In another preferred embodiment, the acid is glutamic acid. In another preferred embodiment, the acid is glycine. In another preferred embodiment, the acid is serine. In another preferred embodiment, the acid is asparagine. In another preferred embodiment, the acid is alanine. In another preferred embodiment, the acid is phenylalanine. In another preferred embodiment, the acid is valine. In another preferred embodiment, the acid is leucine. In another preferred embodiment, the acid is isoleucine. In another preferred embodiment, the acid is histidine. In another preferred embodiment, the acid is arginine. In another preferred embodiment, the acid is tyrosine. In another preferred embodiment, the acid is threonine. In another preferred embodiment, the acid is cysteine. In another preferred embodiment, the acid is methionine. In another preferred embodiment, the acid is tryptophan. In another preferred embodiment, the acid is proline. In another preferred embodiment, the acid is selenocysteine. In another preferred embodiment, the acid is p-toluenesulfonic acid. In another preferred embodiment, the acid is succinic acid. In another preferred embodiment, the acid is acrylic acid. In another preferred embodiment, the acid is aspartic acid. In another preferred embodiment, the acid is chinolinic acid. In another preferred embodiment, the acid is cinchomeronic acid. In another preferred embodiment, the acid is dinicotinic acid. In another preferred embodiment, the acid is formic acid. In another preferred embodiment, the acid is glutaric acid. In another preferred embodiment, the acid is glycolic acid. In another preferred embodiment, the acid is isocinchomeronic acid. In another preferred embodiment, the acid is isocitric acid. In another preferred embodiment, the acid is isonicotinic acid. In another preferred embodiment, the acid is lutidinic acid. In another preferred embodiment, the acid is maleic acid. In another preferred embodiment, the acid is mandelic acid. In another preferred embodiment, the acid is nicotinic acid. In another preferred embodiment, the acid is phtalic acid. In another preferred embodiment, the acid is picolinic acid. In another preferred embodiment, the acid is propionic acid. In another preferred embodiment, the acid is salicylic acid. In another preferred embodiment, the acid is tetronic acid. In another preferred embodiment, the acid is methane sulfonic acid.

In yet another preferred embodiment, an acid is an inorganic acid, preferably, the inorganic acid is selected from the group consisting of phosphoric acid or boric acid. More preferably, the inorganic acid is phosphoric acid.

In a more preferred embodiment, an acid is selected from the group consisting of citric acid, malonic acid, malic acid, pimelic acid, tartaric acid, trimesic acid, aconitic acid, dipicolinic acid, acetic acid, lactic acid, ascorbic acid, glycine. In an even more preferred embodiment, an acid is selected from the group consisting of malonic acid, malic acid, tartaric acid, acetic acid, lactic acid, ascorbic acid, glycine, and citric acid. In an especially preferred embodiment, the acid is citric acid.

In another preferred embodiment, the acid is selected from the group consisting of citric acid, malonic acid, malic

acid, pimelic acid, tartaric acid, trimesic acid, aconitic acid, dipicolinic acid, acetic acid, lactic acid, ascorbic acid, glycine. In another even more preferred embodiment, an acid is selected from the group consisting of malonic acid, malic acid, tartaric acid, acetic acid lactic acid, ascorbic acid, and glycine. In another especially preferred embodiment, an acid is selected from the group consisting of malic acid, tartaric acid, and ascorbic acid.

In a particular embodiment, the preparation of the present invention may comprise an acid and a salt. In a preferred embodiment, the preparation of the present invention may comprise citric acid with an ammonium salt, a potassium salt or a glutamic acid ion salt. In a further preferred embodiment, the ammonium salt is an ammonium citrate salt, the potassium salt is a potassium citrate salt and the glutamic acid ion salt is glutamic acid monosodium salt. In a preferred embodiment, the ammonium citrate salt is an ammonium citrate di-basic salt.

The preparation serves as the basis for the composition. In the same way, therefore, the composition of the present invention may comprise an acid and a salt. In a preferred embodiment, the composition of the present invention may comprise citric acid with an ammonium salt, a potassium salt or a glutamic acid ion salt. In a further preferred embodiment, the ammonium salt is an ammonium citrate salt, the potassium salt is a potassium citrate salt and the glutamic acid ion salt is glutamic acid monosodium salt. In a preferred embodiment, the ammonium citrate salt is an ammonium citrate di-basic salt.

**Entomopathogenic fungi**

In a preferred embodiment, an entomopathogenic fungus is:

*Cordyceps fumosorosea* (formely known as *Isaria fumosorosea* or *Paecilomyces fumosoroseus*) (preferably strain Apopka 97 which is now known as *Cordyceps javanica* (e.g. PFR97 or PreFeRal® WG from Biobest and Certis), strain IF-BDC01, strain FE 9901 / ARSEF 4490 (e.g. NoFly® from Natural Industries Inc., a Novozymes company), strain ESALQ1296 (e.g. from Octane, Koppert) or strain CCM 8367 (e.g. WO 2010 006563));

*Cordyceps javanica* (formerly known as *Isaria javanica*) (preferably strain wf GA17 (referenced in Wu et al., 2020, Environmental Tolerance of Entomopathogenic Fungi: A New Strain of Cordyceps javanica Isolated from a Whitefly Epizootic Versus Commercial Fungal Strains. doi: 10,3390/insects11100711), strain GZQ-1 (referenced in Ou et al., 2019 Identification of a new Cordyceps javanica fungus isolate and its toxicity evaluation against Asian citrus psyllid doi: 10,1002/mbo3,760), strain IjH6102 (e.g. CN 111961598 A), strain pf185 and pf212 (Bocco et al., 2021 Endophytic Isaria javanica pf185 Persists after Spraying and Controls Myzus persicae (Hemiptera: Aphididae) and Colletotrichum acutatum (Glomerellales: Glomerellaceae) in Pepper. doi.org/10,3390/insects12070631), strain JZ-7 (Sun et al., 2021 The roles of entomopathogenic fungal infection of viruliferous whiteflies in controlling tomato yellow leaf curl virus. doi.org/10,1016/j.biocontrol.2021.104552), strain IJNL-N8 / CCTCC M-2017709 (Zhao et al., 2020 Sustainable control of the rice pest, Nilaparvata lugens, using the entomopathogenic fungus Isariajavanica. doi.org/10,1002/ps.6164); or strain GF 511 (which has been deposited by Lallemand Inc. of 1620 rue Préfontaine, Montréal, QC, H1W 2N8, CANADA on 8th June 2021 according to the Budapest Treaty under accession number 080621-01 with the International Depository Authority of Canada (IDAC), 1015 Arlington Street, Winnipeg, Manitoba, R3E 3R2, Canada) (e.g. LALGUARD JAVA, Lallemand);

*Isariafarinosa* (preferably strain ESALQ1205);

*Beauveria bassiana* (preferably strain ATCC 74040 (e.g. Naturalis® from CBC Europe, Italy; Contego BB from Biological Solutions Ltd.; Racer from AgriLife), strain GHA (Accession No. ATCC74250; e.g. BotaniGuard Es and Mycontrol-O from Laverlam International Corporation), strain ATP02 (Accession No. DSM 24665), strain PPRI 5339 (e.g. BroadBand™ from BASF), strain PPRI 7315, strain R444 (e.g. Bb-Protec from Andermatt Biocontrol), strains IL197, IL12, IL236, IL10, IL131, IL116 (all referenced in Jaronski, 2007, Use of Entomopathogenic Fungi in Biological Pest Management, 2007: ISBN: 978-81-308-0192-6), strain Bv025, strain BaGPK, strain ICPE 279, strain CG 716 (e.g. BoveMax® from Novozymes), strain HF23, strain ANT-03 (from Bioceres), strain NPP111B00, strain 203 (e.g. Phoemyc from Glen Biotech), strain Bb10 (from Biagro Bb), strain ESALQ PL63 (from Boveril, Koppert), strain IMI389521, strain IBCB 66 (e.g. from Atrevido, Koppert), strain K4B1 (Beaugenic from Ecolibrium Biologicals), strain K4B3 (Beaublast from Ecolibrium Biologicals), strain CBMAI 1306 (from Auin CE Agrivalle);

*Beauveria brongniartii* (e.g. from Beaupro from Andermatt Biocontrol AG (preferably strain BIPESCO 2 (from Melocont, Agrifutur);

*Metarhizium brunneum* (formely known *as Metarhizium anisopliae*) (preferably strain Cb15 (e.g. ATTRACAP® from Biocare), strain ESALQ 1037 (e.g. from Metarril® SP Organic), strain E-9 (e.g. from Metarril® SP Organic), strain

M206077, strain C4-B (NRRL 30905), strain ESC1, strain 15013-1 (NRRL 67073), strain 3213-1 (NRRL 67074), strain C20091, strain C20092, strain F52 (DSM3884/ ATCC 90448; IMI 507278 which has been deposited on November 18th, 2022 according to the Budapest Treaty with CABI, Bakeham Lane, Egham, Surrey, TW209TY, UK) (e.g. BIO 1020 by Bayer CropScience and also e.g. Met52 by Novozymes or LALGUARD M52 from Lallemand), strain ICIPE 78, strain ESF1 (from BIO-BLAST), strain IBCB 425 (from Metarhizium Oligos, Oligos Biotecnologia), strain LRC112(from SpudSmart, AAFC));

*Metarhizium acridum* (preferably strain ARSEF324 from GreenGuard by BASF or isolate IMI 330189, or ARSEF7486; e.g. Green Muscle by Biological Control Products);

*Metarhizium robertsii* (preferably strain 23013-3 (NRRL 67075));

Metarhizium flavoviride;

Metarhizium rileyi (formerly known as Nomuraea rileyi);

*Myrothecium verrucaria* (preferably strain AARC-0255 (e.g. from DiTera DF, Biagro));

Hirsutella citriformis;

Hirsutella minnesotensis;

*Hirsutella thompsonii* (preferably Mycohit and ABTEC from Agro Bio-tech Research Centre, IN);

*Lecanicillium lecanii* (formerly known as *Verticillium lecanii*) (preferably conidia of strain KV01 (e.g. Mycotal® and Vertalec® from Koppert/Arysta));

Lecanicillium lecanii (formerly known as Verticillium lecanii), strain DAOM198499; strain DAOM216596; strain KV01 (e.g. from Vertalec®, Koppert/Arysta)

Lecanicillium muscarium (formerly known as Verticillium lecanii), in particular strain VE 6 / CABI(=IMI) 268317/ CBS102071/ ARSEF5128 (e.g. Mycotal from Koppert); strain K4V1 (from eNtokill, Ecolibrium Biologicals); strain K4V2 (from eNtoblast, Ecolibrium Biologicals)

Aschersonia aleyrodis;

Conidiobolus obscurus;

Lagenidium giganteum;

*Entomophthora virulenta* (e.g. Vektor from Ecomic);

Zoophthora sp.;

Entomophaga sp.;

Pandora delphacis;

*Sporothrix insectorum* (e.g. Sporothrix Es from Biocerto, BR);

Zoophtora radicans;

*Mucor haemelis* (e.g. BioAvard from Indore Biotech Inputs & Research);

*Purpureocillium lilacinum* (formely also known as *Paecilomyces lilacinus*) (preferably strain 251 (AGAL 89/030550; e.g. BioAct from Bayer CropScience Biologies GmbH), strain PL11 (from BioStat, Certis), or strain UEL Pae 10 (from Unique, Ballagro Agro Tecnologia Ltda.));

*Paecilomyces variotii,* strain Q-09 (preferably Nemaquim® from Quimia, MX));

*Muscodor albus* (preferably strain QST 20799 (Accession No. NRRL 30547));

*Muscodor roseus* (preferably strain A3-5 (Accession No. NRRL 30548));

Monacrosporium cionopagum;

Monacrosporium psychrophilum;

*Myrothecium verrucaria* (preferably strain AARC-0255 (e.g. DiTeraTM by Valent Biosciences);

*Stagonospora phaseoli* (e.g. from Syngenta);

Monacrosporium drechsleri;

Monacrosporium gephyropagum;

Nematoctonus geogenius;

Nematoctonus leiosporus;

Neocosmospora vasinfecta; and

Paraglomus sp, in particular Paraglomus brasilianum;

*Pochonia chlamydosporia* (also known as *Vercillium chlamydosporium*) (preferably var. catenulata (IMI SD 187; e.g. KlamiC from The National Center of Animal and Plant Health (CENSA), CU);

Stagonospora heteroderae;

Meristacrum asterospermum;

Arthrobotrys dactyloides;

Arthrobotrys oligospora; or

Arthrobotrys superba.

In another preferred embodiment, an entomopathogenic fungi is:

*Beauveria bassiana* (preferably strain ATCC 74040 (e.g. Naturalis® from CBC Europe, Italy; Contego BB from Biological Solutions Ltd.; Racer from AgriLife), strain GHA (Accession No. ATCC74250; e.g. BotaniGuard Es and Mycontrol-O from Laverlam International Corporation), strain ATP02 (Accession No. DSM 24665), strain PPRI 5339 (e.g. BroadBand™ from BASF), strain PPRI 7315, strain R444 (e.g. Bb-Protec from Andermatt Biocontrol), strains IL197, IL12, IL236, IL10, IL131, IL116 (all referenced in Jaronski, 2007, Use of Entomopathogenic Fungi in Biological Pest Management, 2007: ISBN: 978-81-308-0192-6), strain Bv025, strain BaGPK, strain ICPE 279, strain CG 716 (e.g. BoveMax® from Novozymes), strain HF23, strain ANT-03 (from Bioceres), strain NPP111B00, strain 203 (e.g. Phoemyc from Glen Biotech), strain Bb10 (from Biagro Bb), strain ESALQ PL63 (from Boveril, Koppert), strain IMI389521, strain IBCB 66 (e.g. from Atrevido, Koppert), strain K4B1 (Beaugenic from Ecolibrium Biologicals), strain K4B3 (Beaublast from Ecolibrium Biologicals), strain CBMAI 1306 (from Auin CE Agrivalle); or

*Metarhizium brunneum* (formely known *as Metarhizium anisopliae*) (preferably strain Cb15 (e.g. ATTRACAP® from Biocare), strain ESALQ 1037 (e.g. from Metarril® SP Organic), strain E-9 (e.g. from Metarril® SP Organic), strain M206077, strain C4-B (NRRL 30905), strain ESC1, strain 15013-1 (NRRL 67073), strain 3213-1 (NRRL 67074), strain C20091, strain C20092, strain F52 (DSM3884/ ATCC 90448 / IMI 507278 which has been deposited on November 18$^{th}$, 2022 according to the Budapest Treaty with CABI, Bakeham Lane, Egham, Surrey, TW209TY, UK) (e.g. BIO 1020 by Bayer CropScience and also e.g. Met52 by Novozymes or LALGUARD M52 from Lallemand), strain ICIPE

78, strain ESF1 (from BIO-BLAST), strain IBCB 425 (from Metarhizium Oligos, Oligos Biotecnologia), strain LRC112(from SpudSmart, AAFC)).

In a more preferred embodiment, an entomopathogenic fungi is:

*Cordyceps fumosorosea* strain Apopka 97 (which has now been reclassified as *C. javanica* strain Apopka 97), strain IF-BDC01, strain FE 9901 / ARSEF 4490, strain ESALQ1296 or strain CCM 8367;

*Cordyceps javanica* strain wf GA17, strain GZQ-1, strain IjH6102, strain pf185, strain pf212, strain JZ-7, strain IJNL-N8 / CCTCC M-2017709, or strain GF 511 (e.g. LALGUARD JAVA, Lallemand);

*Isaria farinosa* strain ESALQ1205;

Beauveria brongniartii strain BIPESCO 2;

*Metarhizium acridum* strain ARSEF324, isolate IMI 330189, or ARSEF7486;

*Metarhizium robertsii* strain 23013-3 (NRRL 67075);

Metarhizium rileyi;

Myrothecium verrucaria strain AARC-0255;

Lecanicillium lecanii strain KV01;

*Lecanicillium lecanii* strain DAOM198499, strain DAOM216596, or strain KV01;

*Lecanicillium muscarium* strain VE 6 / CABI(=IMI) 268317/ CBS102071/ ARSEF5128, strain K4V1, or strain K4V2;

*Purpureocillium lilacinum* strain 251 (AGAL 89/030550, strain PL11, or strain UEL Pae 10;

Paecilomyces variotii strain Q-09;

*Muscodor albus* strain QST 20799 (Accession No. NRRL 30547;

*Muscodor roseus* strain A3-5 (Accession No. NRRL 30548; or

Myrothecium verrucaria strain AARC-0255,

In yet another more preferred embodiment, an entomopathogenic fungi is:

*Cordyceps fumosorosea* (or *C. javanica*) strain Apopka 97, *Cordyceps fumosorosea* strain IF-BDC01, strain FE 9901 / ARSEF 4490, strain ESALQ1296 or strain CCM 8367;

*Cordyceps javanica* strain wf GA17, strain GZQ-1, strain IjH6102, strain pf185, strain pf212, strain JZ-7, strain IJNL-N8 / CCTCC M-2017709, or strain GF 511;

*Metarhizium brunneum* (formely known as *Metarhizium anisopliae)* strain F52 (DSM3884/ ATCC 90448, IMI 507278 which has been deposited by Danstar Ferment AG of Poststrasse 30, CH-6300 Zug, Switzerland on November 18$^{th}$, 2022 according to the Budapest Treaty with CABI, Bakeham Lane, Egham, Surrey, TW209TY, UK), or

*Isaria farinosa* strain ESALQ1205; even more preferably

*Cordyceps fumosorosea* (or *C. javanica*) strain Apopka 97, *Cordyceps fumosorosea* strain IF-BDC01, strain FE 9901 / ARSEF 4490, strain ESALQ1296 or strain CCM 8367;

*Cordyceps javanica* strain wfGA17, strain GZQ-1, strain IjH6102, strain pf185, strain pf212, strain JZ-7, strain IJNL-N8 / CCTCC M-2017709, or strain GF 511; or

*Metarhizium brunneum* (formely known as *Metarhizium anisopliae)* strain F52 (DSM3884/ ATCC 90448, IMI 507278 which has been deposited by Danstar Ferment AG of Poststrasse 30, CH-6300 Zug, Switzerland on November $18^{th}$, 2022 according to the Budapest Treaty with CABI, Bakeham Lane, Egham, Surrey, TW209TY, UK); most preferably

*Cordyceps* strain Apopka 97 (ATCC 20874);

*Cordyceps javanica* strain GF 511 (IDAC 080621-01); or

*Metarhizium brunneum* strain F52 (IMI 507278).

The Apopka 97 strain was previously classified as *Cordycepsfumosorosea* (and, even earlier, as *Isaria fumosorosea*) but in 2017 was reclassified as *Cordyceps javanica* (Avery et al., (2021), Field Efficacy of Cordyceps javanica, White Oil and Spinetoram for the Management of the Asian Citrus Psyllid, Diaphorina citri Insects 2021, 12, 824). Herein the Apopka 97 strain is referred to using both or either classifications interchangeably.

In a preferred embodiment the entomopathogenic fungus is a *Cordyceps javanica* strain. In a preferred embodiment the entomopathogenic fungus is a *Cordyceps javanica* Apopka 97 strain or a *Cordyceps javanica* GF 511 strain. In another preferred embodiment the entomopathogenic fungus is a *Metarhizium brunneum* strain. In a preferred embodiment the entomopathogenic fungus is a *Metarhizium brunneum* F52 strain (IMI 507278).

In an embodiment the entomopathogenic fungus is a *Cordyceps javanica* GF 511 strain (which has been deposited by Lallemand Inc. of 1620 rue Préfontaine, Montréal, QC, H1W 2N8, CANADA on $8^{th}$ June 2021 according to the Budapest Treaty under accession number 080621-01 with the International Depository Authority of Canada (IDAC), 1015 Arlington Street, Winnipeg, Manitoba, R3E 3R2, Canada) (e.g. LALGUARD JAVA, Lallemand).

In an embodiment the entomopathogenic fungus is a *Metarhizium brunneum* F52 strain (DSM3884/ ATCC 90448; IMI 507278 which has been deposited by Danstar Ferment AG of Poststrasse 30, CH-6300 Zug, Switzerland on November $18^{th}$, 2022 according to the Budapest Treaty with CABI, Bakeham Lane, Egham, Surrey, TW209TY, UK).

In an embodiment the entomopathogenic fungus is *Cordyceps* strain Apopka 97.

***Amount of fungus***

Preferably, the number of fungal spores in a composition according to the invention is between 1,0* $10^4$ spores per ml and 1,0* $10^9$ spores per ml, such as between 1,0* $10^5$ spores per ml and 1,0* $10^8$ spores per ml. More preferably, the number of fungal spores is between 5,0* $10^5$ spores per ml and 5,0* $10^7$ spores per ml. Most preferably the number of spores is between 5,5* $10^5$ spores per ml and 5,0* $10^7$ spores per ml, for example 1* $10^7$, for example 1.0* $10^7$.

For example, a composition may comprise *Cordyceps javanica* spores wherein the number of spores is between 1,0* $10^4$ spores per ml and 1,0* $10^9$ spores per ml, such as between 1,0* $10^5$ spores per ml and 1,0* $10^8$ spores per ml. More preferably, the number of *Cordyceps javanica* spores is between 5,0* $10^5$ spores per ml and 5,0* $10^7$ spores per ml. Most preferably the number of *Cordycepsjavanica* spores is between 5,5* $10^5$ spores per ml and 5,0* $10^7$ spores per ml, for example 1* $10^7$, for example 1.0* $10^7$. In some embodiments, a composition may comprise glutamic acid monosodium salt and *Cordyceps javanica* spores wherein the number of spores is between 5,0* $10^5$ spores per ml and 5,0* $10^7$ spores per ml. In other embodiments, a composition may comprise ammonium citrate dibasic salt and *Cordyceps javanica* spores wherein the number of spores is between 5,0* $10^5$ spores per ml and 5,0* $10^7$ spores per ml. In other embodiments, a composition may comprise potassium citrate salt and *Cordyceps javanica* spores wherein the number of spores is between 5,0* $10^5$ spores per ml and 5,0* $10^7$ spores per ml. The concentration of salt in said compositions may be, for example, between 0,05% (w/w) and 0,5% (w/w).

**Further components**

***Liquids for spore formulations***

Preferred liquids for spore formulations suitable for the present invention are selected from the group consisting of polyethylene glycols, such as PEG-300; ethoxylated alcohols (such as Atplus 245, Berol 050, Berol 260, Lucramul CO08, Lucramul L03, Lucramul L05); mono-/polyethylene oxide diethers, such as Tetraglyme; mono-/polyethylene oxide ether-ester (such as n-Butyldiglycolacetat); ethoxylated carboxylic acids (such as Radiasurf 7403, PEG-400-monooleate, Radiasurf 7423); mono-/polyethylene oxide di-esters (such as Radiasurf 7442); polypropylene glycols(such as Dipropylene glycol); propoxylated alcohols (such as Dowanol DPM); mono-/polypropylene oxide diethers (such as Dipropylene glycol dimethyl ether); mono-/polypropylene oxide ether-ester (such as Dipropylene glycol methyl ether acetate); propoxylated carboxylic acids; mono-/polypropylene oxide di-esters (such as Propylenglycol diacetate); alcohol propoxylate-ethoxylates (such as Atlas G-5002L, Lucramul HOT 5902); carboxylic acid propoxylate-ethoxylate; carboxylic acid

propoxylate-ethoxylate ether (such as Leofat OC0503M).

Overview of suitable liquids:

| Name | CAS-No. | Description | supplier |
|---|---|---|---|
| **Atlas G5002L** | 99821-01-9 | Alcohol propoxylate-ethoxylate | Croda |
| **Atplus 245** | | Alcohol ethoxylate | Croda |
| **Berol 050** | 68551-12-2 | Linear ethoxylated alcohol C12-C16, 3EO, HLB 8 | Akzo-Nobel |
| **Berol 260** | | C9-C11 4EO, HLB 10,5 | Akzo-Nobel |
| **Butylcarbitol** | 112-34-5 | diethylenglycol monobutylether | Dow |
| **Butylcellosolve** | 111-76-2 | Ethylenglycolmonobutylether | Dow |
| **Dipropylene glycol** | 110-98-5 | | ABCR |
| **Dipropylene glycol DME** | 111109-77-4 | Dipropylene glycol dimethyl ether | Sigma-Aldrich |
| **Dipropylene glycol methyl ether acetate** | 88917-22-0 | | Sigma-Aldrich |
| **Dowanol DPM** | | Dipropylene Glycol monomethyl ether | Dow |
| **Dowanol TPM** | 25498-49-1 | Tripropylene Glycol monomethyl ether | Dow |
| **Etocas 10** | 61791-12-6 | Ethoxylated Castor oil 10EO, HLB 6,6 | Croda |
| **Hexylcellosolve** | 112-25-4 | Ethylenglycolmonohexylester | Dow |
| **Leofat OC0503M** | | Fettsäure-PO-EO-Me | Lion Chemical |
| **Lucramul COOS** | | Castor oil ethoxylate 8EO | Levaco |
| **Lucramul HOT 5902** | 64366-70-7 | Alcohol propoxylate-ethoxylate | Levaco |
| **Lucramul L03** | | C12-C18 ethoxyated 3EO | Levaco |
| **Lucramul L05** | | C12-C18 ethoxyated 5EO | Levaco |
| **Methoxytriglycol** | 112-35-6 | Triethylenglycol monomethyl ether | Sigma-Aldrich |
| **n-Butyldiglycolacetat** | 112-15-2 | 2-(2-Ethoxyethoxy)ethyl acetate; Diethylene glycol monoethyl ether acetate | Sigma-Aldrich |
| **Propylcellosolve** | 2807-30-9 | Ethylenglycolmonopropylether | Sigma-Aldrich |
| **Propylenglycol Diacetat** | 623-84-7 | | Sigma-Aldrich |
| **Radiasurf 7402** | | PEG200 monooleate | Oleon |
| **Radiasurf 7403** | 9004-96-0 | PEG400 monooleate | Oleon |
| **Radiasurf 7423** | 9004-81-3 | PEG400 monolaurate | Oleon |
| **Radiasurf 7442** | 9005-07-6 | PEG400 dioleate | Oleon |
| **Synperonic PE/L 44** | | Block-Copolymer, 40% EO, 4 PO | Croda |
| **Synperonic PE/L 62** | | Block-Copolymer, 20% EO, 6 PO | Croda |
| **Synperonic PE/L 64** | | Block-Copolymer, 40% EO, 6 PO | Croda |
| **Tetraglyme** | 143-24-8 | Tetraethylenglycol diether | Sigma-Aldrich |

***Oils***

As at least one further component, a composition according to the invention may comprise an oil, more preferably a mineral oil, plant oil or vegetable oil. Among plant oils, the ones preferably used in the present invention are triglyceride-based vegetable oils which are liquid at least at room temperature, preferably also at temperatures below room temperature, such as at 15°C, at 10°C or even at 5°C or 4°C.

Concentrations of oils, preferably plant oil, in a composition according to the invention may range between 0,005 % (w/w) and 0,9 % (w/w) and any other value in between this range, such as between 0,01 % (w/w) and 0,85 % (w/w) and any other value in between this range.

Preferred plant oils are wheat germ oil, soybean oil, peanut oil, rice bran oil, safflor oil, rapeseed oil, sunflower oil, corn oil, walnut oil, hazelnut oil, almond oil or olive oil.

***Antioxidants***

As at least one further component, a composition according to the invention may comprise an antioxidant. Whereas Applicant does not wish to be bound by any scientific theory, it is believed that a certain concentration of antioxidant in the formulation of the invention contributes to the superior storage stability of the formulation, in particular the long stability of the fungal spores comprised therein.

The concentration of antioxidants in the formulation according to the present invention is at least 0,00002 % (w/w) and may be increased to up to 0,05 % (w/w). A preferred range is between 0,00003 % (w/w) and 0,007 % (w/w) and any other value in between this range.

The antioxidant may be any suitable antioxidant, but is preferably selected from the group consisting of butylhydroxytoluol (BHT), butylhydroxyanisole (BHA), ascorbyl palmitate, tocopheryl acetate, ascorbyl stearate or the group of carotinoids (e.g. beta-carotin) or gallates (e.g. ethyl gallate, propyl gallate, octyl gallate, dodecyl gallate).

In a more preferred embodiment, the antioxidant is butylhydroxytoluol which has been shown in the examples to contribute to the very good stability of the fungal spores in the formulation of the present invention. Further preferred, said butylhydroxytoluol is present in a concentration of between 0,00002 % (w/w) and 0,01 % (w/w) and any other value in between this range, preferably between 0,00004 % (w/w) and 0,006 % (w/w) and any other value in between this range.

Some plant oils naturally have a high content of antioxidants, e.g. wheat germ oil. In case such plant oil is used, the further addition of an antioxidant may not be necessary, or the amount may be reduced in order to arrive at the concentrations described herein which are believed to be one factor responsible for the enhanced storage stability of the present formulation. Accordingly, for such plant oils with a high content of antioxidants, such as at least 0,00008 % (w/w), no addition of further antioxidant may be necessary. In such cases, the required percentage of antioxidant according to the invention is comprised in the minimum concentration of plant oil according to the invention.

***Emulsifier***

As at least one further component, a composition according to the invention may further comprise an emulsifier. If used, the concentration of emulsifier should be at least 0,0002 % (w/w). The maximum concentration of said at least one emulsifier should not exceed 0,3 % (w/w). Accordingly, useful ranges for emulsifiers range between 0,0002 % (w/w) and 0,2% (w/w), and any value in between this range.

Suitable emulsifiers include ethoxylated sorbitan esters, e.g. ethoxylated sorbitan trioleate 20EO, (e.g. Tween 85); ethoxylated sorbitan monooleate (e.g. Tween 80); ethoxylated sorbitan monolaurate (e.g. Emulsogen 4156, Tween 20 or Polysorbate 20); or ethoxylated sorbitol esters, e.g. ethoxylated sorbitol hexaoleate 40EO (e.g. Arlatone TV); ethoxylated sorbitol tetraoleate-laurate 40EO (e.g. Atlox 1045-A); or ethoxylated castor oils, e.g. Emulsogen EL400, Emulsogen EL360, Emulsogen EL300, Lucramul CO30, Agnique CSO25 or Etocas 10; or polyethylenglycol (e.g. PEG 400). These emulsifiers are preferably present in a range of between about 0,0015 % (w/w) and 0,125 % (w/w) and any other value in between this range.

In a preferred embodiment, said emulsifier is an ethoxylated sorbitol ester, such as ethoxylated sorbitol hexaoleate 40EO.

In another preferred embodiment, said emulsifiers are combined with other emulsifiers such as ethoxylated alcohols or propoxylated-ethoxylated alcohols. These substances are best described by the general formula $X-O-[CH_2-CH(CH_3)-O]_m-[CH_2-CH_2-O-]_n-OH$ where X is a branched or linear alcohol, saturated or partially unsaturated, with 1-24 carbon atoms, preferably 2-18, more preferably 3-14, most preferably 4-10, wherein m is an average number between 0 and 20, preferably 0-15; more preferably 0-10, and wherein n is an average number between 1 and 20, preferably 2-15, more preferably 3-10, These emulsifiers are preferably present in a range of between about 0% (w/w) to 0,1% (w/w) and any other value in between this range.

***Rheology modifier***

As at least one further component, a composition according to the invention may further comprise a rheology modifier. Rheology modifiers are preferably derived from minerals. These rheology modifiers provide long term stability

when the formulation is at rest or in storage. Furthermore, it has been found in the course of the present invention that such rheology modifiers seem to contribute to the increased storage stability of the present formulation.

Suitable compounds are rheological modifiers selected from the group consisting of hydrophobic and hydrophilic fumed and precipitated silica particles, gelling clays including bentonite, hectorite, laponite, attapulgite, sepiolite, smectite, or hydrophobically/organophilic modified bentonite.

Rheology modifiers are preferably derived from minerals. These rheology modifiers provide long term stability when the composition is at rest or in storage. Furthermore, it has been found in the course of the present invention that such rheology modifiers seem to contribute to the increased storage stability of the present formulation.

Suitable compounds are rheological modifiers selected from the group consisting of hydrophobic and hydrophilic fumed and precipitated silica particles, gelling clays including bentonite, hectorite, laponite, attapulgite, sepiolite, smectite, or hydrophobically/organophilic modified bentonite.

In connection with the present invention, fumed or precipitated silica is preferred as rheology modifier.

Fumed silica, also known as pyrogenic silica, either hydrophilic or hydrophobic, usually is composed of amorphous silica fused into branched, chainlike, three-dimensional secondary particles which then agglomerate into tertiary particles. The resulting powder has an extremely low bulk density and high surface area. Both hydrophilic and hydrophobic fumed silica can be used in the present invention

Fumed silica usually has a very strong thickening effect. The primary particle size is ca. 5-50 nm. The particles are non-porous and have a surface area of ca. 50-600 $m^2/g$.

Hydrophilic fumed silica is made from flame pyrolysis of silicon tetrachloride or from quartz sand vaporized in a 3000°C electric arc. Major global producers are Evonik Industries, tradename AEROSIL®); Cabot Corporation, tradename Cab-O-Sil®; Wacker Chemie, HDK product range; and OCI, tradename Konasil®.

Hydrophilic fumed silica can be hydrophobized by further treatment with reactive silicium-containing agents in order to modify the physicochemical properties of the silica. Typically hydrophobisation takes place by treatment of a hydrophilic fumed silica with agents like hexaalkyldisilanes (e.g. $((CH_3)_3Si)_2$), trialkylsilylchlorides (e.g. $(CH_3)_3SiCl$) or dialkyldichlorsilanes (e.g. $(CH_3)_2SiCl_2$). Hydrophobized fumed silica is available e.g. from Evonik Industries (AEROSIL R-types), and Cabot (Cab-O-Sil).

Best results are obtained using a hydrophilic fumed silica having a BET surface area of 150 to 350 $m^2/g$, e. g. 150, 200, 250, 300 or 350,

Precipitated silica is produced by acidifying aqueous alkaline silicate solutions with mineral acids. Variations of the precipitation process lead to different precipitated silica qualities namely with different specific surface areas. The precipitates are washed and dried. Precipitated silica having a particle size of below 10 $\mu m$ are most effective for the present invention. The specific surface area is typically from ca. 50-500 $m^2/g$. Global producers are for example Evonik Industries, tradename SIPERNAT® or Wessalon®; Rhodia, tradename Tixosil®; and PPG Industries, tradename Hi-Sil™.

Major global producers for fumed (pyrogenic) hydrophilic or hydrophbized silicas are Evonik (tradename Aerosil®), Cabot Corporation (tradename Cab-O-Sil®), Wacker Chemie (HDK product range), Dow Coming, and OCI (Konasil®). Another class of suitable rheology modifiers are precipitated silicas, and major global producers are Evonik (tradenames Sipernat® or Wessalon®), Rhodia (Tixosil) and PPG Industries (Hi-Sil).

Particularly preferred in connection with the present composition is fumed silica having a BET surface area of about 200 $m^2/g$ obtainable e.g. as Aerosil® 200,

Another class of suitable examples for rheology modifiers are clay thickeners. Clay thickeners are generally micronized layered silicates that can be effective thickeners for a wide range of applications. They are typically employed either in their non-hydrophobized or hydrophobized form. In order to make them dispersible in non-aqueous solvents, the clay surface is usually treated with quaternary ammonium salts. These modified clays are known as organo-modified clay thickeners. Optionally, small amounts of alcohols of low molecular weight or water may be employed as activators. Examples for such clay-based rheology modifiers include smectite, bentonite, hectorite, attapulgite, seipiolite or montmorillonite clays. Preferred rheological modifiers (b) are for example organically modified hectorite clays such as Bentone® 38 and SD3, organically modified bentonite clays, such as Bentone® 34, SD1 and SD2, organically modified sepiolite such as Pangel® B20, hydrophilic silica such as Aerosil® 200, hydrophobic silica such as Aerosil® R972, R974 and R812S, attapulgite such as Attagel® 50,

Another class of suitable examples for rheology modifiers are organic rheological modifiers based on modified hydrogentated castor oil (trihydroxystearin) or castor oil organic derivatives such as Thixcin® R and Thixatrol® ST.

Table B: Examples of rheology modifiers

| Tradename | Company | General description | Physical properties | CAS- No. |
|---|---|---|---|---|
| Bentone® 38 | Elementis Specialties, US | Organic derivative of a hectorite clay | Density: 1.7 $g/cm^3$ | 12001-31-9 |

(continued)

| Tradename | Company | General description | Physical properties | CAS- No. |
|---|---|---|---|---|
| Bentone® SD-3 | Elementis Specialties, US | Organic derivative of a hectorite clay | Density: 1.6 $g/cm^3$ | |
| | | | Particle size (dispersed): <1$\mu$m | |
| Bentone® 34 | Elementis Specialties, US | Organic derivative of a bentonite clay | Density: 1.7 $g/cm^3$ | 68953-58-2 |
| Bentone® SD-1 | Elementis Specialties, US | Organic derivative of a bentonite clay | Density: 1.47 $g/cm^3$ | 89749-77-9 |
| Bentone® SD-2 | Elementis Specialties, US | Organic derivative of a bentonite clay | Density: 1.62 $g/cm^3$ | 89749-78-0 |
| Pangel® B20 | Tolsa S.A., ES | Organically modified sepiolite | | 63800-37-3 |
| Sipernat® 22S | Evonik Industries AG, DE | Precipitated amorphous silicon dioxide | *BET: 190 $m^2/g$<br>Average primary particle size: 12 nm | 112926-00-8 |
| Aerosil® 200 | Evonik Industries AG, DE | Hydrophilic fumed silica | *BET: 200 $m^2/g$<br>Average primary particle size: 12 nm | 112945-52-5<br>7631-86-9 |
| Aerosil® R 972 / R972V | Evonik Industries AG, DE | Hydrophilic fumed silica | *BET: 90-130 $m^2/g$ | 68611-44-9 |
| Aerosil® R 974 | Evonik Industries AG, DE | Hydrophilic fumed silica | *BET: 150-190 $m^2/g$ | 68611-44-9 |
| Aerosil® R 812S | Evonik Industries AG, DE | Hydrophilic fumed silica | *BET: 260 $\pm$ 30 $m^2/g$ | 68909-20-6 |
| Attagel® 50 | BASF AG, DE | Attapulgite clay: $(Mg,Al)_5Si_8O_{20}•4H_2O$ | Density: > 1,0 $g/cm^3$<br>Average particle size: 9 $\mu$m | 14808-60-7 |
| Thixcin® R | Elementis Specialties, US | organic derivative of castor oil | Density: 1,02 $g/cm^3$ | 38264-86-7 |
| Thixatrol® ST | Elementis Specialties, US | organic derivative of castor oil, Octadecanamide | Density: 1,02 $g/cm^3$ | 51796-19-1 |

Said rheology-modifying agent may be present in the formulation of the invention in a concentration of up to 0,07 % (w/w), preferably between 0,00003 % (w/w) and 0,04 % (w/w) and any other value in between this range

***Polyether-modified trisiloxane***

The formulation may in addition comprise a polyether-modified trisiloxane which is preferably of formula I

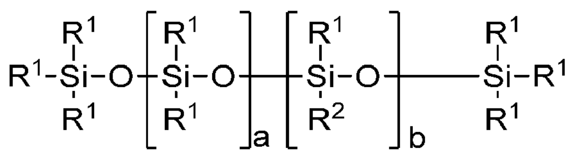

Formula (I)

where

$R^1$ represents independent from each other identical or different hydrocarbyl radicals having 1-8 carbon atoms, preferred methyl-, ethyl-, propyl- and phenyl radicals, particularly preferred are methyl radicals.

a = 0 to 1, preferred 0 to 0,5, particularly preferred 0,

b = 0,8 to 2, preferred 1 to 1.2, particularly preferred 1,

in which: a + b < 4 and b>a, preferred a + b <3 and particularly preferred a + b <2,

$R^2$ represents independent from each other identical or different polyether radicals of general formula (II)

$$-R^3O[CH_2CH_2O]_c[CH_2CH(CH_3)O]_d[CHR^4CHR^4O]_eR^5 \qquad \text{Formula (II)}$$

$R_3$ = independent from each other identical or different, bivalent hydrocarbyl radicals having 2 - 8 carbon atoms, which are optionally interrupted by oxygen atoms, preferred rest is the general formula (III) where n = 2 - 8, particularly preferred $-CH_2-CH_2-CH_2-$,

$$-\left[ CH_2 \right]_n-$$

Formula (III)

$R^4$ = independent from each other identical or different hydrocarbyl radicals having 1-12 carbon atoms or hydrogen radical, preferably a methyl-, ethyl-, phenyl- or a hydrogen radical.

$R^5$ = independent from each other identical or different hydrocarbyl radicals having 1-16 carbon atoms, which are optionally contain urethane functions, carbonyl functions or carboxylic acid ester functions, or hydrogen radical, preferred methyl or H, particularly preferred H.

C = 0 to 40, preferred 1 to 15, particularly preferred 2 to 10

d = 0 to 40, preferred 0 to 10, particularly preferred 1 to 5

e = 0 to 10, preferred 0 to 5, particularly preferred 0,

in which c + d + e > 3

The polyether-modified trisiloxanes described above can be prepared by methods well known to the practioner by hydrosilylation reaction of a Si-H containing siloxane and unsaturated polyoxyalkylene derivatives, such as an allyl derivative, in the presence of a platinum catalyst. The reaction and the catalysts employed have been described for example, by W. Noll in "Chemie und Technologie der Silicone", 2nd ed., Verlag Chemie, Weinheim (1968), by B. Marciniec in "Appl. Homogeneous Catal. Organomet. Compd. 1996, 1, 487). It is common knowledge that the hydrosilylation products of SiH-containing siloxanes with unsaturated polyoxyalkylene derivatives can contain excess unsaturated polyoxyalkylene derivative.

Examples of water soluble or self-emulsifyable polyether-modified (PE/PP or block-CoPo PEPP) trisiloxanes include but are not limited to those described by CAS-No 27306-78-1 (e.g. Silwet L77 from MOMENTIVE), CAS-No 134180-76-0 (e.g. BreakThru S233 or BreakThru S240 from Evonik), CAS-No 67674-67-3 (e.g Silwet 408 from WACKER), other BreakThru-types, and other Silwet-types.

Preferred polyether-modified trisiloxanes include those described by CAS-No 134180-76-0, in particular BreakThru S240. In one preferred embodiment, the polyether-modified trisiloxane has the chemical denomination oxirane, mono(3-(1,3,3,3-tetramethyl-1-((trimethylsilyl)oxy)disiloxanyl) propyl)ether. It is most preferred that the polyether-modified trisiloxane is Breakthru S240.

The amount of polyether-modified trisiloxane, if present in the formulation, is at least 0,001% (w/w), such as at least 0,002 % (w/w) or at least 0,004 % (w/w). Preferably, the amount of polyether modified trisiloxane ranges between 0,001 % (w/w) and 0,4 % (w/w).

Depending on the nature of the water used to prepare a composition according to the invention, the skilled person is aware that further components such as impurities in the water, may be present in a composition according to the invention. The nature of such impurities depends on the water source, e.g. rain-water or ground-water. For example, such impurities can be (metal) ions and their counter ions, small particles of dirt (soil or sand) or organic impurities. However, preferably, the amount of such additional components (impurities) is 1 % (w/w) or less, more preferably 0,5 % (w/w) or less, even more preferably 0,05 % (w/w) or less. Most preferably, water contains impurities of 0,005 %

(w/w) or less. For the sake of this invention, such impurities are encompassed by the weight values of the water in a composition according to the invention, i.e. it is not required to separately measure the amounts of impurities for evaluating if a composition is a composition according to the invention.

The skilled person will understand that in a composition according to the invention, the sum of all components in said composition always sum up to 100, If not mentioned otherwise, the % (w/w) values given herein refer to the total weight amount of a composition according to the invention.

**Method and uses**

In a further aspect, the present invention relates to a method for controlling insects and/or nematodes, preferably insects, in or on a plant, for enhancing growth of a plant or for increasing plant yield or root health comprising applying an effective amount of the preparation or composition according to the invention as described above to said plant or to a locus where plants are growing or intended to be grown. In one preferred embodiment, the method is a method wherein a synergistic composition according to the invention is applied.

The amount of the composition according to the invention when brought to the field in accordance with any of the methods described herein, is at least 0,05 l/ha (hectare), such as between 1 to 10000 l/ha, 1 to 7500 l/ha, such as 80l/ha to 5000l/h, e.g., 100 l/ha, 200 l/ha, 300 l/ha, 400 l/ha, 500 l/ha, 600 l/ha, 700 l/ha, 800 l/ha, 900 l/ha, 1000 l/ha, 1100 l/ha, 1200 l/ha, 1300 l/ha, 1400 l/ha, 1500 l/ha, 1600 l/ha, 1700 l/ha, 1800 l/ha, 1900 l/ha, 2000 l/ha, 2200 l/ha, 2400 l/ha, 2600 l/ha, 2800 l/ha, 3000 l/ha, 3200 l/ha, 3400 l/ha, 3600 l/ha, 3800 l/ha, 4000 l/ha, 4200 l/ha, 4400 l/ha, 4600 l/ha, 4800 l/ha. In one embodiment where the composition comprises *C. fumosorosea* spores, e.g., for insect control, the amount to the field preferably ranges between 1 and 10000 l/ha, such as between 2 l/ha and 40 l/ha, e.g. between 5 l/ha and 30 l/ha, between 30 l/ha and 50 l/ha such as around 40 l/ha, between 200 l/ha to 1000 l/ha, such as between 200 l/ha to 500 l/ha, or up to 10000 l/ha such as between 5000 l/ha and 10000 l/ha, between 6000 l/ha and 10000 l/ha, between 7000 l/ha and 10000 l/ha, between 8000 l/ha and 10000 l/ha, between 9000 l/ha and 10000 l/ha. In one embodiment where the composition comprises *M. brunneum* spores, e.g., for insect control, the amount to the field preferably ranges between 1 and 10000 l/ha, such as between 2 l/ha and 40 l/ha, e.g. between 5 l/ha and 30 l/ha between 30 l/ha and 50 l/ha such as around 40 l/ha, between 100 to 2000 l/ha, between 500 to 1500 l/ha, or up to 10000 l/ha such as between 5000 l/ha and 10000 l/ha, between 6000 l/ha and 10000 l/ha, between 7000 l/ha and 10000 l/ha, between 8000 l/ha and 10000 l/ha, between 9000 l/ha and 10000 l/ha. In one embodiment where the composition comprises *C. javanica* spores, e.g., for insect control, the amount to the field preferably ranges between 1 and 10000 l/ha, such as between 2 l/ha and 40 l/ha, e.g. between 5 l/ha and 30 l/ha between 30 l/ha and 50 l/ha such as around 40 l/ha, between 100 to 2000 l/ha, between 500 to 1500 l/ha, or up to 10000 l/ha such as between 5000 l/ha and 10000 l/ha, between 6000 l/ha and 10000 l/ha, between 7000 l/ha and 10000 l/ha, between 8000 l/ha and 10000 l/ha, between 9000 l/ha and 10000 l/ha. The skilled person will understand that the exact rate being dependent on the spore concentration in the composition according to the invention as well as on the kind of spores. The number of spores in a composition according to the invention is usually between $1 \times 10^4$ and $1 \times 10^9$ spores/g composition, e.g. for soil or foliar application. Further preferred amounts are mentioned above.

In a preferred embodiment, the increase of efficacy of controlling insects and/or nematodes, preferably insects, of a composition according to the invention vs the same composition without the acid (wherein the amount of (missing) acid is substituted by water) is at least 5%, more preferably at least 10%, even more preferably at least 15%, such as 20% or more, 25% or more or even 30% or more.

In yet a further aspect, the present invention relates to a method for an increased control of insects and/or nematodes, preferably insects, in or on a plant, for enhancing growth of a plant or for increasing plant yield or root health comprising applying an effective amount of the preparation or composition according to the invention as described above to said plant or to a locus where plants are growing or intended to be grown. Preferably, the increase is at least 5%, more preferably at least 10%, more preferably at least 15%, even more preferably at least 20% compared with the effect of a composition without the acid as described herein but otherwise with all components as a composition according to the invention. In one preferred embodiment, the method is a method wherein a synergistic composition according to the invention is applied.

Another aspect refers to the use of a salt as defined herein for increasing the efficacy of fungal spores as defined herein to control insects and/or nematodes, preferably insects. Preferably, the increase is at least 5%, more preferably at least 10%, more preferably at least 15%, even more preferably at least 20% compared to the efficacy of said fungal spores in the absence if said acid. Preferably, the use refers to an increase which is caused by the presence of said salt in an

amount of between 0,0001% (w/w) and 30% (w/w) in a spore formulation.

The present invention also relates to the use of a salt as defined herein for enhancing the efficacy of fungal spores in a preparation or composition according to the invention in agriculture. Preferably, the increase is at least 5%, more preferably at least 10%, more preferably at least 15%, even more preferably at least 20% compared to the efficacy of said fungal spores in the absence if said salt. Preferably, the use refers to an increase which is caused by the presence of said salt in an amount of between 0,0001% (w/w) and 30% (w/w) in a spore formulation.

In another aspect the present invention relates to the use of a preparation or composition as disclosed herein for controlling insects and/or nematodes, preferably insects, in, on and/or around a plant, for enhancing growth of a plant or for increasing plant yield or root health. In one preferred embodiment, the use is a use of a synergistic composition according to the invention.

In another aspect the present invention relates to the use of a preparation or composition as disclosed herein for an enhances control of insects and/or nematodes, preferably insects, in, on and/or around a plant, for enhancing growth of a plant or for increasing plant yield or root health, wherein the increase is at least 5%, more preferably at least 10%, more preferably at least 15%, even more preferably at least 20% compared with the effect of a composition without the salt as described herein but otherwise with all components as a composition according to the invention, wherein the weight of (missing) salt is replaced by water to ensure the % (w/w) values of the other components are essentially the same. In one preferred embodiment, the use is a use of a synergistic composition according to the invention.

**Plants**

Plants which can be treated in accordance with the invention include the following main crop plants: maize, soya bean, alfalfa, cotton, sunflower, Brassica oil seeds such as Brassica napus (e.g. canola, rapeseed), Brassica rapa, B. juncea (e.g. (field) mustard) and Brassica carinata, Arecaceae sp. (e.g. oilpalm, coconut), rice, wheat, sugar beet, sugarcane, oats, rye, barley, millet and sorghum, triticale, flax, nuts, grapes and vine and various fruit and vegetables from various botanic taxa, e.g. Rosaceae sp. (e.g. pome fruits such as apples and pears, but also stone fruits such as apricots, cherries, almonds, plums and peaches, and berry fruits such as strawberries, raspberries, red and black currant and gooseberry), Ribesioidae sp., Juglandaceae sp., Betulaceae sp., Anacardiaceae sp., Fagaceae sp., Moraceae sp., Oleaceae sp. (e.g. olive tree), Actinidaceae sp., Lauraceae sp. (e.g. avocado, cinnamon, camphor), Musaceae sp. (e.g. banana trees and plantations), Rubiaceae sp. (e.g. coffee), Theaceae sp. (e.g. tea), Sterculiceae sp., Rutaceae sp. (e.g. lemons, oranges, mandarins and grapefruit); Solanaceae sp. (e.g. tomatoes, potatoes, peppers, capsicum, aubergines, tobacco), Liliaceae sp., Compositae sp. (e.g. lettuce, artichokes and chicory-including root chicory, endive or common chicory), Umbelliferae sp. (e.g. carrots, parsley, celery and celeriac), Cucurbitaceae sp. (e.g. cucumbers-including gherkins, pumpkins, watermelons, calabashes and melons), Alliaceae sp. (e.g. leeks and onions), Cruciferae sp. (e.g. white cabbage, red cabbage, broccoli, cauliflower, Brussels sprouts, pak choi, kohlrabi, radishes, horseradish, cress and chinese cabbage), Leguminosae sp. (e.g. peanuts, peas, lentils and beans-e.g. common beans and broad beans), Chenopodiaceae sp. (e.g. Swiss chard, fodder beet, spinach, beetroot), Linaceae sp. (e.g. hemp), Cannabeacea sp. (e.g. cannabis), Malvaceae sp. (e.g. okra, cocoa), Papaveraceae (e.g. poppy), Asparagaceae (e.g. asparagus); useful plants and ornamental plants in the garden and woods including turf, lawn, grass and Stevia rebaudiana; and in each case genetically modified types of these plants. Other examples plants of which can be treated in accordance with the invention could also include macadamia, pecan, cashew, walnut, coconut, guava, mango, papaya, acerola, passion fruit, pineapple or soursop.

**Insects & Acari (mites and ticks)**

Preferably, the formulations according to the invention are used by spray application against insect pests from the following insect families:

Preference is given to Coleopteran, Hemiptera, Diptera or Lepidopteran plant pest, including a Diabrotica, Leptinotarsa, Phyllotreta, Acyrthosiphan, Bemisia, Halyomorpha, Ostrinia, Lygus, Helicoverpa, Nezara, Spodoptera plant pest, Curculionidae, Chrysomelidae, of Scolytinae , Cerambycidae, Bruchinae, Buprestidae, Scarabaeidae, Dynastinae, Lyctinae, Anobiidae, Bostrichidae, Coccoidea (scale insects) Cercopoidea (spittlebugs, froghoppers), Membracoidea (Cicadelloidea), Fulgoroidea, Heteroptera, Reduviidae (assassin bugs), Cimicidae (bedbugs and flower bugs), Miridae (plant bugs) Coreidae (Leaf-footed bugs, squash bugs & sweet potato bugs), Lygaeidae (seed bugs) Rhyparochromidae (seed bugs), Pentatomidae (stink bugs or shield bugs), Sternorrhyncha Aphididae (aphids), Eriosomatinae (gall aphids), Pemphigidae (gall aphids), Adelgidae (conifer aphids), Chermesidae (conifer aphids), Phylloxeridae (phylloxerans), Aleyrodidae (whiteflies), Psyllidae (jumping plant lice), Noctuoidea, Anthomyiidae, Tephritidae, Muscidae, Agromyzidae, Drosophilidae, Tabanidae, Calliphoridae, Cecidomyiidae, Tachinidae, Mycetophilidae, Simuliidae, Stratiomyidae, Psychodidae, Opilioacarida, Holothyrida, Ixodida, Mesostigmata, Trigynaspida or Monogynaspida.

Especially, preference is given to *Bemisia* and *Trialeurodes,* specifically to *Bemesia tabaci* (silverleaf whitefly)

and *Trialeurodes vaporariorum,* (greenhouse whitefly) in crops such as, for example, soybean, melon, tabacco, tomatoes, squash, poinsettia, cucumber, eggplants, okra, beans or cotton.

Preference is further given from the family of the woolly aphids (Pemphigidae) to: Eriosoma spp., Pemphigus spp., in crops such as, for example, citrus fruit, pomaceous fruit, stone fruit, leaf vegetables, root and tuber vegetables or ornamental plants.

Preference is given from the family of the grape lice (Phylloxeridae) to: Phylloxera spp. in grapevines, nuts, or citrus fruit.

Preference is given from the family of the coffee berry borer (Hypothenemus hampei) (Coleoptera: Curculionidae, Scolytinae in coffee.

Preference is given from the family of the corn leaf hopper, Dalbulus maidis (Hemiptera, Cicadellidae) in maize, apples, beans, carrots, celery, onions, potatoes, peppers, soybean, melon, tabacco, tomatoes, squash, poinsettia, cucumber, eggplants, okra, beans or cotton.

Preference is given from the family of the fall armyworm and cotton bowl worm (Noctuidae) in cereals (maize, sorghum, millet, rice), soybean, melon, tabacco, tomatoes, squash, poinsettia, cucumber, eggplants, okra, beans or cotton.

Preference is further given from the family of the jumping plant lice (Psyllidae) to: Psylla spp., Paratrioza spp., Tenalaphara spp., Diaphorina spp., or Trioza spp., in crops such as, for example, pomaceous fruit, stone fruit, citrus fruit, vegetables, potatoes, in tropical crops.

Preference is further given from the family of the soft scales (Coccidae) to: Ceroplastes spp., Drosicha spp., Pulvinaria spp., Protopulminaria spp., Saissetia spp., or Coccus spp., in perennial crops such as, for example, citrus fruit, pomaceous fruit, stone fruit, olives, grapevines, coffee, tea, tropical crops, ornamental plants, vegetables.

Preference is further given from the family of the armoured scale insects (Diaspididae) to: Quadraspidiotus spp., Aonidiella spp., Lepidosaphes spp., Aspidiotus spp., Aspis spp., Diaspis spp., Parlatoria spp., Pseudaulacaspis spp., Unaspis spp., Pinnaspis spp., or Selenaspidus spp., in crops such as, for example, citrus fruit, pomaceous fruit, stone fruit, almonds, pistachios, nuts, olives, tea, ornamental plants, grapevines, tropical crops.

Preference is further given from the family of the ensign scales (Ortheziidae) to: Orthezia spp. in citrus fruit, pomaceous fruit, stone fruit. Preference is given from the family of the mealy bugs (Pseudococcidae) to: Pericerga, Pseudococcus spp., Planococcus spp., or Dysmicoccus spp., in crops such as, for example, citrus fruit, stone fruit andpomaceous fruit, tea, grapevines, vegetables, ornamental plants and tropical crops.

Preference is furthermore given from the family of the whiteflies (Aleyrodidae) to: Bemisia tabaci, Bemisia argentifolii, Trialeurodes vaporariorum, Aleurothrixus floccosus, Aleurodes spp., Dialeurodes spp., or Parabemisia myricae in crops such as, for example, vegetables, melons, potatoes, tobacco, soft fruit, citrus fruit, ornamental plants, cotton, soya beans and tropical crops.

Moreover, preference is given from the family of the aphids (Aphidae) to:

Myzus spp. in tobacco, stone fruit, soft fruit, fruit vegetables, leafy vegetables, tuber and root vegetables, melons, potatoes, ornamental plants, spices, Acyrthosiphon onobrychis in vegetables, Aphis spp. in tobacco, citrus fruit, pomaceous fruit, stone fruit, melons, strawberries, soft fruit, fruit vegetables, leafy vegetables, tuber, stem and root vegetables, ornamental plants, potatoes, pumpkins, spices, Rhodobium porosum in strawberries, Nasonovia ribisnigri in leafy vegetables, Macrosiphum spp. in ornamental plants, potatoes, leafy vegetables and fruit vegetables, strawberries, Phorodon humuli in hops, Brevicoryne brassicae in leafy vegetables, Toxoptera spp. in citrus fruit, stone fruit, almonds, nuts, spices, Aulacorthum spp. in citrus fruit, potatoes, fruit vegetables and leafy vegetables, Anuraphis cardui in vegetables, Brachycaudus helycrisii in sunflowers, or Acyrthosiphon onobrychis in vegetables.

Likewise, preference is given from the family of the thrips (Thripidae) to: Anaphothrips spp., Baliothrips spp., Caliothrips spp., Frankliniella spp., Heliothrips spp., Hercinothrips spp., Rhipiphorothrips spp., Scirtothrips spp., Kakothrips spp., Selenothrips spp. or Thrips spp., in crops such as, for example, fruit, cotton, grapevines, tea, nuts, tropical crops, ornamental plants, conifers, tobacco, spices, vegetables, soft fruit, melons, citrus fruit and potatoes.

Moreover, preference is given from the families of the leaf-miner flies (Agromyzidae) and root-maggot flies (Anthomyiidae) to: Agromyza spp., Amauromyza spp., Atherigona spp., Chlorops spp., Liriomyza spp., Oscinella spp. or Pegomyia spp. in crops such as, for example, vegetables, melons, potatoes, nuts, ornamental plants.

Preference is given from the families of the leafhoppers (Cicadellidae) and planthoppers (Delphacidae) to: Circulifer spp., Dalbus spp., Empoasca spp., Erythroneura spp., Homalodisca spp., Iodioscopus spp., Laodelphax spp., Nephotettix spp., Nilaparvata spp., Oncometopia spp. or Sogatella spp., in crops such as, for example, citrus fruit, fruit, grapevines, potatoes, vegetables, ornamental plants, conifers, melons, soft fruit, tea, nuts, rice and tropical crops.

Preference is given from the family of the leaf-miner moths (Gracillariidae) to:

Caloptilia spp., Gracillaria spp., Lithocolletis spp., Leucoptera spp., Phtorimaea spp. or Phyllocnistis spp. in crops such as pomaceous fruit, stone fruit, grapevines, nuts, citrus fruit, conifers, potatoes, coffee.

Preference is given from the family of the gall midges (Cecidomyiidae) to:

Contarinia spp., Dasineura spp., Diplosis spp., Prodiplosis spp., Thecodiplosis spp., Sitodiplosis spp. or Haplodiplosis

spp. in crops such as citrus fruit, pomaceous fruit, stone fruit, vegetables, potatoes, spices, soft fruit, conifers, hops.

Likewise, preference is given from the family of the fruit flies (Tephritidae) to:

Anastrepha spp., Ceratitis spp., Dacus spp. or Rhagoletis spp. in crops such as vegetables, soft fruit, melons, pomaceous and stone fruit, ornamental plants, potatoes, grapevines, tropical crops, citrus fruit, olives.

Moreover, preference is given to mites from the families of the spider mites (Tetranychidae) and the gall mites (Eriophydae):

Tetranychus spp., Panonychus spp. or Aculops spp. in crops such as vegetables, potatoes, ornamental plants, citrus fruit, grapevines, conifers.

Preference is given from the family of the weevils, *Sphenophorus levis* in sugarcane and the banana weevil *Cosmopolites sordidus* in banana (Coleoptera: Curculionidae).

The inventive treatment of the plants and parts of plants with the compositions according to the invention is effected directly or by allowing the compositions to act on their surroundings, environment or storage space by the customary treatment methods, for example by drenching, immersion, spraying, evaporation, fogging, scattering, painting on and, in the case of propagation material, in particular in the case of seeds, also by applying one or more coats. Preferably, the plant to be treated is selected from the group consisting of cotton, soya beans, tobacco, vegetables, spices, ornamental plants, conifers, citrus plants, fruit, tropical crops, nuts and grapevines.

Preferably, the composition according to the invention acts against pests from the families of the woolly aphids, grape lice, jumping plant lice, soft scales, armored scale insects, ensign scales, mealy bugs, whiteflies, aphids, thrips, leafhoppers, planthoppers, leaf-miner flies, gall midges, fruit flies, leaf-miner moths, spider mites or gall mites.

In another preferred embodiment, the preparation or composition according to the invention acts against Diptera, including species from the family Culicidae such as Anopheles spp., Aedes spp., or Culex spp. In another preferred embodiment, further families are Anthomyiidae, Tephritidae, Muscidae, Agromyzidae, Drosophilidae, Tabanidae, Calliphoridae, Cecidomyiidae, Tachinidae, Mycetophilidae, Simuliidae, Stratiomyidae or Psychodidae.

In some embodiments the preparation may comprise spores of *C. javanica* Apopka 97 and glutamic acid monosodium salt, ammonium citrate di-basic salt or potassium citrate salt. The preparation may increase white fly mortality. In some embodiments the composition may comprise water, spores of *C. javanica* Apopka 97 and one or more of glutamic acid monosodium salt, ammonium citrate di-basic salt or potassium citrate salt. The composition may increase white fly mortality. In some embodiments, the composition may comprise water, spores of *C. javanica* Apopka 97 and one or more of 0,08% glutamic acid monosodium salt, 0,06% ammonium citrate di-basic salt or 0,08% potassium citrate salt. The composition may increase white fly mortality.

In some embodiments the preparation may comprise spores of *C. javanica* GF 511 and glutamic acid monosodium salt. The preparation may increase white fly mortality. In some embodiments the composition may comprise water, spores of *C. javanica* GF 511 and glutamic acid monosodium salt. The composition may increase white fly mortality. In some embodiments the composition may comprise spores of *C. javanica* GF 511 and 0,08% glutamic acid monosodium salt. The composition may increase white fly mortality.

**Kit**

In a further aspect, the entomopathogenic fungi and the salt may be comprised within a kit. The entomopathogenic fungi and the salt may be spatially separated within the kit, for example the kit may comprise at least two housings or containers, one comprising the entomopathogenic fungi and one comprising salt. The kit may further comprise at least one housing comprising an acid. The entomopathogenic fungi and salt may be comprised in separate housings or containers. The entomopathogenic fungi may be present as spores. The entomopathogenic fungal spores may be in powder form, optionally a wettable powder form. The entomopathogenic fungal spores may be dispersed in an aqueous solution or dispersed in a non-aqueous solution. The entomopathogenic fungal spores may be spores of any species described herein, prefereably of *Cordyceps fumosorosea, Cordyceps javanica* or *Metarhizium brunneum.* The entomopathogenic fungal spores may be spores of a *Cordyceps javanica* Apopka 97 strain or *Cordyceps javanica* GF 511 strain. The entomopathogenic fungal spores may be spores of a *Metarhizium brunneum* F52 strain. The kit may additionally comprise instructions or a description of how to prepare a composition of the invention or apply a method of the invention.

In a further aspect, the present invention relates to a kit-of-parts comprising an entomopathogenic fungi to prepare a composition according to the invention and a description how to prepare a composition according to the invention.

In a preferred embodiment, the kit-of-part further comprises one or more salts to prepare a composition according to the invention.

Preferably, the entomopathogenic fungi being spatially separated in a container. More preferably, the entomopathogenic fungi and the salt (if present in a kits-of-parts) are separated from each other in two spatially separated containers, thus resulting in the kit-of-parts comprising two separated components and a description how to prepare a composition according to the invention.

Moreover, the kit of parts according to the present invention can additionally comprise at least one auxiliary selected from the group consisting of extenders, solvents, spontaneity promoters, carriers, emulsifiers, dispersants, frost protectants, thickeners and adjuvants as mentioned herein. This at least one auxiliary can be present in one or more than one component of the kit of parts, e.g. in the component comprising an entomopathogenic fungi or in the component comprising an acid, being spatially separated from each other, or in both of these components or in the form of a separate component thus resulting in the kit-of-parts comprising at least three components spatially separated from each other.

The description how to prepare a composition according to the invention gives the skilled person the information regarding mixing ratios between a salt, preferably being already part of the kits-in-parts, water and an entomopathogenic fungi formulation to arrive at a composition according to the invention. For example, if the salt is present in a separated aqueous solution or as a solid in the kit-of-part and the fungi is present in form of a separated solid form (such as a powder) or a dispersion, the description will provide information how much solid form (powder) has to be combined with how much water and how much salt to arrive at a composition according to the invention. The preparation of a composition according to the invention can include further steps, e.g., of adding further components or pre-solubilizing or pre-emulsifying the salt or the fungal spores, such as pre-emulsifying a solid entomopathogenic fungi-preparation, before combining the pre-emulsified or pre-solubilized component with a further component, such as (e.g., a pre-solubilized) salt.

Furthermore, the description preferably comprises time limits between the preparation of a composition according to the invention and its use (e.g. spraying the composition on a plant, plant part or habitat of a plant). Preferably, the preparation of a composition according to the invention takes place not longer than 48 hours before the use of the composition according to the invention. More preferably, the preparation of a composition according to the invention takes place not longer than 24 hours before the use of the composition according to the invention, even more preferably not longer than 12 or even 8 hours before the use of the composition according to the invention.

The following examples illustrate the invention in a non-limiting fashion.

## Examples

### Example 1: Synergistic action of an enthomopathogenic fungus *C. javanica* strain Apopka 97, and glutamic acid monosodium salt, ammonium citrate di-basic or potassium citrate for insect control

### Production of spores and spore formulations of *C. javanica* strain Apopka 97

To obtain conidia of *C. javanica* strain Apopka 97, solid state fermentation was used as described in Mascarin et al. (2013, "The virulence of entomopathogenic fungi against Bemisia tabaci biotype B (Hemiptera: Aleyrodidae) and their conidial production using solid substrate fermentation", Biological Control https://doi.org/10.1016/j.biocontrol.2013.05.001). To prepare the inoculum for the solid state fermentation, *C. javanica* was grown on Agar-based medium SDAY (sabouraud dextrose agar plus yeast extract) for 14 days at 26°C. A conidial suspension was then obtained by washing off the conidia with water with surfactant (0.1% of Tween80) and using a cell scraper. For the fermentation, moistened and autoclaved rice (moisture content 40-50%) was placed in flasks, capped with a cotton ball and aluminum foil, and inoculated with a conidial suspension (1,0E+07 conidia per g moist rice). Spore concentrations were determined using a haemocytometer. The inoculated flasks were incubated for 11 days at 26°C. At the end of the fermentation process, spores were harvested by vacuuming and collecting them in a cyclone (Jaronski et al., 2007, "Chapter 11 - Mass Production of Entomopathogenic Fungi: State of the Art", Mass Production of Beneficial Organisms https://doi.org/10.1016/B978-0-12-391453-8.00011-X). Harvested spores were dried resulting in a concentration of 2E+11 spores per g technical spore concentrate.

### Testing of insecticidal activity

For testing insecticidal activity against white flies, single-leaf cotton plants (*Gossypium herbaceum*) were infected with *Bemisia tabaci* by exposing the plants to respective white fly populations for 24h which results in an extensive deposition of eggs on the cotton leaves. Afterwards the plants were incubated for 8-10 days at 25°C until hatching and development of immobile N1 nymphal stages. Per experiment, five single-leaf cotton plants were used and treated as five biological replicates. For the treatments, *C. javanica* conidia were suspended in tap water. If pure spores were used, the spore powder was put in suspension by using a Potter-Elvehjem homogenizer. Formulated spores were added to water and stirred to gain homogenous suspensions. Likewise, blank formulations were dispersed and stirred in water to generate control treatments containing an equal concentrations of formulation ingredients. Spore concentrations for each treatment were determined using a haemocytometer and if not otherwise indicated spore concentrations were adjusted to a final concentration of 1,0E+07 conidialml. E.g., to prepare a treatment with 1,0E+07 spores/ml, 50 mg of the pure spore powder or 250 mg of the formulated spores were suspended in 100 ml water followed by a 1/10 dilution step with water. For additive testing, stock solutions of the respective compound in water were made first, before adding an

appropriate volume of the stock solutions to the treatment. A 1% stock solution of each of the three tested salts was made.

Before spraying, whitefly nymphs were checked for good coverage on the leaves and the infected plants were sprayed with the prepared solutions by using an automatic spraying system machine with integrated residue drying and afterwards incubated in climate chambers under controlled conditions (25 °C and 70 % RH). The spraying was done by using a two-nozzle system so that plants were sprayed from above and below (20 ml per plant and per treatment in total) to achieve the best coverage of the plants/insects. Twelve days after treatment, one representative leaf per plant and 30 to 60 nymphs belonging to various developmental stages (N1-N3) were examined to calculate insect mortality (percentage of dead insects). The efficacy of treatments was calculated using Abbott's formula (Abbott, 1925, "A Method of Computing the Effectiveness of an Insecticide", Journal of Economic Entomology https://doi.org/10.1093/jee/18.2265a):

$$\text{Abbott efficacy} = \frac{X-Y}{X} \cdot 100$$

Where *X* represents the percentage of living insects after control treatment and *Y* represents the percentage of living insects after treatment.

In order to determine the expected efficacy of the composition of two treatments the Colby formula was used (Colby, 1967, "Calculating Synergistic and Antagonistic Responses of Herbicide Combinations", Weeds https://doi.org/10.2307/4041058):

$$\mathrm{E} = X + Y - \frac{X \cdot Y}{100}$$

Where *X* represents the percentage of control (Abbott efficacy) of treatment 1, *Y* represents the percentage of control of treatment 2, and *E* equals the expected percentage of control of a combined treatment 1 and 2, The observed values for the combined treatments were compared with the expected values: when *E* was less than the observed value, the composition was considered synergistic, when *E* was greater than the observed value, the composition was considered antagonistic, and when E equaled the observed value, the composition was identified as additive.

Spores of *C. fumosorosea* strain Apopka 97 were produced, dried and applied as described above. Pure spores in a concentration of 1,0E+07 spores/ml were either treated alone, or in composition with each of 0,08% glutamic acid monosodic salt, 0,06% of ammonium citrate di-basic or 0,08% potassium citrate. To exemplify the preparation of 20 ml spray liquid containing 1,0E+07 spores/ml and 0,08% glutamic acid monosodic salt, the following applies: 50 mg of pure spores were suspended in 100 ml water. After determining the number of spores per ml using a haemocytometer (e.g. a Thoma chamber), the amount of this suspensions needed to reach 1,0E+07 spores per ml in 20 ml was calculated. E.g., if the initial spore suspension contained 1,0E+08 spores/ml, then 2 ml of this spore suspension were added to 17 ml of water followed by 1 ml of the 1% stock solution of glutamic acid monosodic salt. A solution of 1 ml of the 1% stock solution of glutamic acid monosodic salt in 19 ml of water and pure water served as control experiments. A similar approach was taken for ammonium citrate di-basic and potassium citrate. Four independent experiments were conducted to calculate the insect mortality for each treatment.

Tables 1 and 2 show the mortality of white flies after treatment with *C. javanica* and glutamic acid monosodic salt (Table 1), ammonium citrate di-basic (Table 2) and potassium citrate (Table 2). The mortality of white flies was calculated for the indicated treatments as described in the examples of the main text. For each treatment, a total of 20 leaves were examined.

A solution of 0,1% citric acid alone and with 1,0E+07 spores/ml (Table 1) or a solution of 0,05% citric acid alone and with 1,0E+07 spores/ml (Table 2) was also tested for supplementary comparison.

To calculate treatment efficacy, pure water was set as control treatment and Abbott's formula (Abbott, 1925) was used to calculate the efficacy of the treatment with pure spores, the efficacy of the treatment with the tested salts or acid, and the efficacy of the composition of both treatments (Tables 1 and 2).

White fly mortality was significantly and synergistically higher when applying a composition of C. *fumosorosea* spores and any one of glutamic acid monosodium, ammonium citrate di-basic or potassium citrate than when applying *C. fumosorosea* spores alone or the salt alone (Tables 1 and 2).

Table 1: Synergistic action of *C. javanica* and glutamic acid monosodic salt and citric acid for the control of white flies

| Treatment | Abbott efficacy (expected Colby efficacy) |
|---|---|
| 1,0E+07 s/ml | 62,10 |
| 0,1% citric acid | 9,86 |
| 0,08% glutamic acid monosodic salt | -0,34 |

(continued)

| Treatment | Abbott efficacy (expected Colby efficacy) |
|---|---|
| 1,0E+07 s/ml + 0,1% citric acid | 77,47 (65,84) |
| 1,0E+7 s/ml + 0,08% glutamic acid monosodic salt | 88,41 (61,97) |

The expected efficacy of the composition of both treatments with glutamic acid monosodic salt was calculated with Colby's formula (Colby, 1967) and this expected control was found to be 26,44% less than the observed level of control indicating that the treatment of spores and the treatment of glutamic acid monosodic saltare synergistic for insect control (Table 1). Regarding the treatment with citric acid, the expected efficacy as calculated with Colby's formula (Colby, 1967) was found to be 11,63% less than the observed level of control indicating that the treatment of spores and acid citric are synergistic for insect control (Table 1) but less effective than the glutamic acid monosodic salt treatment.

Table 2: Synergistic action of *C. javanica* and ammonium citrate di-basic, potassium citrate and citric acid for the control of white flies

| Treatment | Abbott efficacy (expected Colby efficacy) |
|---|---|
| 1,0E+07 s/ml | 26,46 |
| 0,05% citric acid | 7,88 |
| 0,06% ammonium citrate di-basic | 6,34 |
| 0,08% potassium citrate | 1,74 |
| 1,0E+07 s/ml + 0,05% citric acid | 56,53 (32,26) |
| 1,0E+7 s/ml + 0,06% ammonium citrate di-basic | 59,01 (31,12) |
| 1,0E+7 s/ml + 0,08% potassium citrate | 39,44 (27,74) |

The expected efficacy of the composition of both treatments with ammonium citrate di-basic and potassium citrate was calculated with Colby's formula (Colby, 1967) and this expected control was found to be 27,89% and 11,7% less than the observed level of control indicating that the treatment of spores and the treatment of ammonium citrate di-basic and potassium citrate, respectively, are synergistic for insect control (Table 2). Regarding the treatment with citric acid, the expected efficacy as calculated with Colby's formula (Colby, 1967) was found to be 24,27% less than the observed level of control indicating that the treatment of spores and acid citric are synergistic for insect control (Table 2).

**Example 2: Synergistic action of an enthomopathogenic fungus *C. javanica* strain GF 511 and glutamic acid monosodium salt, for insect control**

Spores of *C. javanica* strain GF 511 were blended with distilled water containing Tween 80 (0,05% v/v). Pure spores in a concentration of 1,0E+07 CFU/ml were either treated alone, or in composition with 0,08% glutamic acid monosodium salt. The 20 ml spray liquid containing 1,0E+07 spores/ml and 0,08% glutamic acid monosodium salt was prepared as follows: 1 g of pure spores (1,0E+10) were suspended in 100 ml of Tween 80 (0,05% v/v) solution. After determining the number of spores per ml using a haemocytometer (e.g., a Thoma chamber), the amount of this suspension needed to reach 1,0E+07 spores per ml in 20 ml was calculated. E.g., if the initial spore suspension contained 1,0E+08 spores/ml, then 2 ml of this spore suspension was added to 17 ml of water followed by 1 ml of the 1% stock solution of glutamic acid monosodium salt. A solution of 1 ml of the 1% stock solution of glutamic acid monosodium salt in 19 ml of water and pure water served as control experiments.

A solution of 0,05% citric acid alone and with 1,0E+07 spores/ml (Table 3) was also tested for supplementary comparison.

For testing insecticidal activity against white flies, 9-day-old plants (*Phaseolus vulgaris* cv. Pérola) with two primary leaves grown with Oxisol (2 L) with fertilizer NPK 5-30-15 were kept in a screenhouse covered with a fine screen fabric (50 mesh). Adult-infested plants with *Bemisia tabaci* were shaken and placed next to pest-free bean plants (9 days old with two primary leaves) for 6 to 8h to allow oviposition. This exposure provided more than 200 eggs per leaf. Afterwards the plants were transferred to a clean and insect-free room and incubated at 25°C until hatching and development of immobile N2 nymphal stages (10 to 12 days after infestation). Per treatment, seven pots with four bean plants in the two-leave stage were used as biological replicates. The experiment was conducted in a randomized block design in five screenhouse benches, one for each repetition, with the treatments randomized within the block.

Before spraying, whitefly nymphs were checked for good coverage on the leaves and the infected plants were sprayed with the prepared solutions as detailed above. The different treatments were applied to the abaxial side of primary

leaves containing nymphs with a microsprayer (0.30 mm needle, Paasche© airbrush type H-set) connected to a vacuum pump and calibrated to 250 µl per leaf in an even coverage. The amount is adjusted in function of the size of the primary leaves in order to ensure a good coverage. Afterwards, the plants are incubated under controlled conditions (30 °C and 40 % RH). Fourteen days after treatment, one plant/pot (two leaves per treatment) were destructively evaluated for insect mortality. Nymphal mortality was assessed under a dissecting stereomicroscope (Leica) at x40 magnification. For confirming the fungal infection, a small red dot was marked on the leaf next to the dead nymphs. The leaves were then incubated inside Gerbox box with a wet cotton added to the leaf petiole for four days at room temperature. The dead marked nymphs presenting sporulation (i.e., mycosed nymphs) were considered infected by the fungus.

The efficacy of treatments was calculated using Abbott's formula as described in Example 1.

To calculate treatment efficacy, Tween 80 (0.05% v/v) was set as control treatment and Abbott's formula (Abbott, 1925) was used to calculate the efficacy of the treatment with pure spores and the efficacy of the treatment with glutamic acid monosodium salt and the efficacy of the compositions of both treatments (Table 3).

Table 3: Synergistic action of *C. javanica* strain GF511 and glutamic acid monosodium salt for the control of white flies

| Treatment | Abbott efficacy (expected Colby efficacy) |
|---|---|
| 1,0E+07 s/ml + 0,05% Tween | 67,82 |
| 0,05% citric acid + 0,05% Tween | 3.56 |
| 0,08% glutamic acid monosodium salt + 0,05% Tween | 7,57 |
| 1,0E+7 s/ml + 0,05% citric acid + 0,05% Tween | 79,27 (68,97) |
| 1,0E+7 s/ml + 0,08% glutamic acid monosodium salt + 0,05% Tween | 81,29 (70,26) |

The expected efficacy of both treatments was calculated with Colby's formula (Colby, 1967) and this expected control was found to be 11,03% less than the observed level of control indicating that the treatment of spores and the treatment of glutamic acid monosodium salt are synergistic for insect control (Table 3).

**Embodiments**

1. A preparation comprising a salt and spores of an entomopathogenic fungus.

2. The preparation of embodiment 1, wherein the spores of an entomopathogenic fungus are in a wettable powder form, wettable granule form, dispersed in an aqueous liquid or dispersed in a non-aqueous liquid, optionally oil.

3. The preparation of embodiment 2, wherein the spores of an entomopathogenic fungus are in a wettable powder form.

4. The preparation of any one of the preceding embodiments, wherein the salt is an aluminum salt, ammonium salt, calcium salt, ferrous salt, ferric salt, hydrogen salt, magnesium salt, potassium salt, sodium salt, chloride salt, sulfate salt, hydrogen sulfate salt, sulfite salt, hydrogen sulfite salt, carbonate salt, hydrogen carbonate salt, bicarbonate salt, acetate salt, lactic acid ion salt, hydroxide salt, phosphate salt, hydrogen phosphate salt, dihydrogen phosphate salt, nitrate salt, nitrite salt, formate salt, citrate salt, amide salt, oxalate salt, malonic acid ion salt, chloride salt, tartrate ion salt, ascorbate ion salt, glutamic acid ion salt, lysine acid ion salt, serine acid ion salt, glutamate ion salt, glutamine acid ion salt, alanine acid ion salt, phenylalanine acid ion salt, valine acid ion salt, leucine acid ion salt, isoleucine acid ion salt, histidine acid ion salt, arginine acid ion salt, tyrosine acid ion salt, threonine acid ion salt, cysteine acid ion salt, methionine acid ion salt, tryptophan acid ion salt, proline acid ion salt, selenocysteine acid ion salt, succinate ion salt, aspartic acid salt, glycolate ion salt or salycilate ion salt.

5. The preparation of any one of the preceding embodiments, wherein the salt is an ammonium salt, a potassium salt or a glutamic acid ion salt.

6. The preparation of any one of the preceding embodiments, wherein the salt is an ammonium citrate salt, potassium citrate salt or glutamic acid monosodium salt.

7. The preparation of embodiment 6, wherein the ammonium citrate salt is an ammonium citrate di-basic salt.

8. The preparation of any one the preceding embodiments, further comprising an acid.

9. The preparation of embodiment 8, wherein the acid is an organic acid, optionally wherein the organic acid is oxalic acid, dipicolinic acid, citric acid, trimesic acid, aconitic acid, phosphoric acid, benzoic acid, sorbic acid, acetic acid, lactic acid, ascorbic acid, glutamic acid, glycine, serine, phosphoric acid, aconitic acid, tartaric acid, succinic acid, malonic acid or malic acid.

10. The preparation of embodiment 9, wherein the acid is citric acid.

11. The preparation of any one of the preceding embodiments, wherein the entomopathogenic fungus is:

*Beauveria bassiana,* optionally strain ATCC 74040, strain GHA (Accession No. ATCC74250), strain ATP02 (Accession No. DSM 24665), strain PPRI 5339, strain PPRI 7315, strain R444, strains IL197, IL12, IL236, IL10, IL131, IL116, strain Bv025, strain BaGPK, strain ICPE 279, strain CG 716, strain HF23, strain ANT-03, strain NPP111B00, strain 203, strain Bb10, strain ESALQ PL63, strain IMI389521, strain IBCB 66, strain K4B1, strain K4B3, or strain CBMAI 1306; or
*Metarhizium brunneum* (formely known as*Metarhizium anisopliae*), optionally strain Cb15, strain ESALQ 1037, strain E-9, strain M206077, strain C4-B (NRRL 30905), strain ESC1, strain 15013-1 (NRRL 67073), strain 3213-1 (NRRL 67074), strain C20091, strain C20092, strain F52 (DSM3884/ ATCC 90448, IDAC Accession No. IMI 507278), strain ICIPE 78, strain ESF1, strain IBCB 425 or strain LRC112.

12. The preparation of any one of the preceding embodiments, wherein the entomopathogenic fungus is:

*Cordyceps fumosorosea,* optionally strain IF-BDC01, strain FE 9901 / ARSEF 4490, strain ESALQ1296 or strain CCM 8367; or
*Cordyceps javanica,* optionally strain Apopka 97, strain GF 511 (IDAC Accession No. 080621-01), wfGA17, strain GZQ-1, strain IjH6102, strain pf185, strain pf212, strain JZ-7, or strain IJNL-N8 / CCTCC M-2017709; or
*Isariafarinosa,* optionally strain ESALQ1205.

13. The preparation of any one of the preceding embodiments, further comprising at least one further component, wherein the further component is one or more liquids for spore formulations, an oil, antioxidant, emulsifier, or rheology modifier, one or more other components being present in a fungal spore formulation, or one or more impurities which can be found in water.

14. The preparation of any one of the preceding embodiments, wherein the entomopathogenic fungus is *Cordyceps javanica* Apopka 97.

15. The preparation of embodiment 14, wherein the salt is an ammonium citrate salt, potassium citrate salt or glutamic acid monosodium salt.

16. The preparation of any one of embodiments 1 to 13, wherein the entomopathogenic fungus is *Cordyceps javanica* GF 511 (IDAC Accession number 080621-01).

17. The preparation of embodiment 16, wherein the salt is glutamic acid monosodium salt.

18. A composition comprising water, a salt, and spores of an entomopathogenic fungus, wherein the amount of salt in the composition is between 0,0001% (w/w) and 30% (w/w).

19. The composition of embodiment 18, wherein the concentration of the fungus is between $1{,}0 * 10^4$ spores per ml composition and $1{,}0 * 10^9$ spores per ml composition.

20. The composition of embodiment 18 or 19, wherein the salt is an aluminum salt, ammonium salt, calcium salt, ferrous salt, ferric salt, hydrogen salt, magnesium salt, potassium salt, sodium salt, chloride salt, sulfate salt, hydrogen sulfate salt, sulfite salt, hydrogen sulfite salt, carbonate salt, hydrogen carbonate salt, bicarbonate salt, acetate salt, lactic acid ion salt, hydroxide salt, phosphate salt, hydrogen phosphate salt, dihydrogen phosphate salt, nitrate salt, nitrite salt, formate salt, citrate salt, amide salt, oxalate salt, malonic acid ion salt, chloride salt, tartrate ion salt, ascorbate ion salt, glutamic acid ion salt, lysine acid ion salt, serine acid ion salt, glutamate ion salt, glutamine acid ion salt, alanine acid ion salt, phenylalanine acid ion salt, valine acid ion salt, leucine acid ion salt, isoleucine acid ion salt,

histidine acid ion salt, arginine acid ion salt, tyrosine acid ion salt, threonine acid ion salt, cysteine acid ion salt, methionine acid ion salt, tryptophan acid ion salt, proline acid ion salt, selenocysteine acid ion salt, succinate ion salt, aspartic acid salt, glycolate ion salt or salycilate ion salt.

21. The composition of any one of embodiments 18 to 20, wherein the salt is an ammonium salt, a potassium salt or a glutamic acid ion salt.

22. The composition of any one of embodiments 18 to 21, wherein the salt is an ammonium citrate salt, potassium citrate salt or glutamic acid monosodium salt.

23. The composition of embodiment 22, wherein the ammonium citrate salt is an ammonium citrate di-basic salt.

24. The composition of any one of embodiments 18 to 23, further comprising an acid.

25. The composition of embodiment 24, wherein the acid is an organic acid, optionally wherein the organic acid is oxalic acid, dipicolinic acid, citric acid, trimesic acid, aconitic acid, phosphoric acid, benzoic acid, sorbic acid, acetic acid, lactic acid, ascorbic acid, glutamic acid, glycine, serine, phosphoric acid, aconitic acid, tartaric acid, succinic acid, malonic acid or malic acid.

26. The composition of embodiment 25, wherein said acid is citric acid.

27. The composition of any one of embodiments 18 to 26, wherein the entomopathogenic fungus is:

*Beauveria bassiana,* optionally strain ATCC 74040, strain GHA (Accession No. ATCC74250), strain ATP02 (Accession No. DSM 24665), strain PPRI 5339, strain PPRI 7315, strain R444, strains IL197, IL12, IL236, IL10, IL131, IL116, strain Bv025, strain BaGPK, strain ICPE 279, strain CG 716, strain HF23, strain ANT-03, strain NPP111B00, strain 203, strain Bb10, strain ESALQ PL63, strain IMI389521, strain IBCB 66, strain K4B1, strain K4B3, or strain CBMAI 1306; or
*Metarhizium brunneum* (formely known as*Metarhizium anisopliae*)*,* optionally strain Cb15, strain ESALQ 1037, strain E-9, strain M206077, strain C4-B (NRRL 30905), strain ESC1, strain 15013-1 (NRRL 67073), strain 3213-1 (NRRL 67074), strain C20091, strain C20092, strain F52 (DSM3884/ ATCC 90448, IDAC Accession No. IMI 507278), strain ICIPE 78, strain ESF1, strain IBCB 425 or strain LRC112.

28. The composition of any one of embodiments 18 to 26, wherein the entomopathogenic fungus is:

*Cordyceps fumosorosea,* optionally strain IF-BDC01, strain FE 9901 / ARSEF 4490, strain ESALQ1296 or strain CCM 8367; or
*Cordyceps javanica,* optionally strain Apopka 97, strain GF 511 (IDAC Accession No. 080621-01), wfGA17, strain GZQ-1, strain IjH6102, strain pf185, strain pf212, strain JZ-7, or strain IJNL-N8 / CCTCC M-2017709; or
*Isariafarinosa,* optionally strain ESALQ1205.

29. The composition of any one of embodiments 18 to 28, further comprising at least one further component, wherein the further component is one or more liquids for spore formulations, an oil, antioxidant, emulsifier, or rheology modifier, one or more other components being present in a fungal spore formulation, or one or more impurities which can be found in water.

30. The composition of any one of embodiments 18 to 29, wherein the entomopathogenic fungus is *Cordyceps javanica* Apopka 97.

31. The composition of embodiment 30, wherein the salt is an ammonium citrate salt, potassium citrate salt or glutamic acid monosodium salt.

32. The composition of any one of embodiments 18 to 29, wherein the entomopathogenic fungus is *Cordyceps javanica* GF 511 (IDAC Accession number 080621-01).

33. The composition of embodiment 32, wherein the salt is glutamic acid monosodium salt.

34. Use of a salt as defined in any one of embodiments 4-7, 14, 16, 20-23, 31 or 33 for increasing the efficacy of

entomopathogenic fungal spores as defined in any one of embodiments 2, 3, 10, 11, 13, 15, 27, 28, 30 or 32 to control insects and/or nematodes.

35. A method for enhancing the efficacy of fungal spores comprising contacting spores of an entomopathogenic fungus as defined in any one of embodiments 2, 3, 10, 11, 13, 15, 27, 28, 30 or 32 with a salt as defined in any one of embodiments 4-7, 14, 16, 20-23, 31 or 33.

36. A method for controlling insects and/or nematodes, in or on a plant, for enhancing growth of a plant or for increasing plant yield or root health comprising applying an effective amount of a preparation according to any one of embodiments 1 to 17 or a composition according to any one of embodiments 18 to 33 to said plant or to a locus where plants are growing or intended to be grown.

37. The use of embodiment 34 or the method of embodiment 35 or 36 wherein the entomopathogenic fungus is *Cordyceps javanica* Apopka 97 and the salt is an ammonium citrate salt, potassium citrate salt or glutamic acid monosodium salt, wherein the composition increases white fly (Aleyrodidae) mortality.

38. The use of embodiment 34 or the method of embodiment 35 or 36 wherein the entomopathogenic fungus is *Cordyceps javanica* GF 511 (IDAC Accession number 080621-01) and the salt is an ammonium citrate salt, potassium citrate salt or glutamic acid monosodium salt, wherein the composition increases white fly (Aleyrodidae) mortality.

39. The method of any one of embodiments 35 to 38, wherein the amount of preparation or composition is at least 0,05 1/ha.

40. A kit comprising spores of an entomopathogenic fungus as defined in any one of embodiments 2, 3, 10, 11, 13, 15, 27, 28, 30 or 32 and a salt as defined in any one of embodiments 4-7, 14, 16, 20-23, 31 or 33, wherein the entomopathogenic fungi and the salt are spatially separated, optionally wherein said kit is suitable for preparation of a composition according to any one of embodiments 18 to 33.

41. The kit of embodiment 40 further comprising a description of how to prepare a composition according to any one of embodiments 18 to 33.

## Claims

**1.** A preparation comprising a salt and spores of an entomopathogenic fungus.

**2.** The preparation of claim 1, wherein the spores of an entomopathogenic fungus are in a wettable powder form, wettable granule form, dispersed in an aqueous liquid or dispersed in a non-aqueous liquid, optionally oil, optionally wherein the spores of an entomopathogenic fungus are in a wettable powder form.

**3.** The preparation of claim 1 or 2, wherein the salt is an aluminum salt, ammonium salt, calcium salt, ferrous salt, ferric salt, hydrogen salt, magnesium salt, potassium salt, sodium salt, chloride salt, sulfate salt, hydrogen sulfate salt, sulfite salt, hydrogen sulfite salt, carbonate salt, hydrogen carbonate salt, bicarbonate salt, acetate salt, lactic acid ion salt, hydroxide salt, phosphate salt, hydrogen phosphate salt, dihydrogen phosphate salt, nitrate salt, nitrite salt, formate salt, citrate salt, amide salt, oxalate salt, malonic acid ion salt, chloride salt, tartrate ion salt, ascorbate ion salt, glutamic acid ion salt, lysine acid ion salt, serine acid ion salt, glutamate ion salt, glutamine acid ion salt, alanine acid ion salt, phenylalanine acid ion salt, valine acid ion salt, leucine acid ion salt, isoleucine acid ion salt, histidine acid ion salt, arginine acid ion salt, tyrosine acid ion salt, threonine acid ion salt, cysteine acid ion salt, methionine acid ion salt, tryptophan acid ion salt, proline acid ion salt, selenocysteine acid ion salt, succinate ion salt, aspartic acid salt, glycolate ion salt or salycilate ion salt, optionally
wherein the salt is an ammonium salt, a potassium salt or a glutamic acid ion salt, for example an ammonium citrate salt, potassium citrate salt or glutamic acid monosodium salt, optionally wherein the ammonium citrate salt is an ammonium citrate di-basic salt.

**4.** The preparation of any one the preceding claims, further comprising an acid, optionally wherein the acid is:

an organic acid for example oxalic acid, dipicolinic acid, citric acid, trimesic acid, aconitic acid, phosphoric acid, benzoic acid, sorbic acid, acetic acid, lactic acid, ascorbic acid, glutamic acid, glycine, serine, phosphoric acid,

aconitic acid, tartaric acid, succinic acid, malonic acid or malic acid, optionally citric acid.

**5.** The preparation of any one of the preceding claims, wherein the entomopathogenic fungus is:

*Beauveria bassiana,* optionally strain ATCC 74040, strain GHA (Accession No. ATCC74250), strain ATP02 (Accession No. DSM 24665), strain PPRI 5339, strain PPRI 7315, strain R444, strains IL197, IL12, IL236, IL10, IL131, IL116, strain Bv025, strain BaGPK, strain ICPE 279, strain CG 716, strain HF23, strain ANT-03, strain NPP111B00, strain 203, strain Bb10, strain ESALQ PL63, strain IMI389521, strain IBCB 66, strain K4B1, strain K4B3, or strain CBMAI 1306; or
*Metarhizium brunneum* (formely known as *Metarhizium anisopliae*), optionally strain Cb15, strain ESALQ 1037, strain E-9, strain M206077, strain C4-B (NRRL 30905), strain ESC1, strain 15013-1 (NRRL 67073), strain 3213-1 (NRRL 67074), strain C20091, strain C20092, strain F52 (DSM3884/ ATCC 90448, IDAC Accession No. IMI 507278), strain ICIPE 78, strain ESF1, strain IBCB 425 or strain LRC112
*Cordyceps fumosorosea,* optionally strain IF-BDC01, strain FE 9901 / ARSEF 4490, strain ESALQ1296 or strain CCM 8367; or
*Cordycepsjavanica,* optionally strain Apopka 97, strain GF 511 (IDAC Accession No. 080621-01), wf GA17, strain GZQ-1, strain IjH6102, strain pf185, strain pf212, strain JZ-7, or strain IJNL-N8 / CCTCC M-2017709; or
*Isaria farinosa,* optionally strain ESALQ 1205.

**6.** The preparation of any one of the preceding claims, wherein the entomopathogenic fungus is:

*Cordyceps javanica* Apopka 97, optionally wherein the salt is an ammonium citrate salt, potassium citrate salt or glutamic acid monosodium salt; or
*Cordyceps javanica* GF 511 (IDAC Accession number 080621-01), optionally wherein the salt is glutamic acid monosodium salt.

**7.** A composition comprising water, a salt, and spores of an entomopathogenic fungus, wherein the amount of salt in the composition is between 0,0001% (w/w) and 30% (w/w), optionally wherein:

(a) the concentration of the fungus is between $1,0*10^4$ spores per ml composition and $1,0*10^9$ spores per ml composition; and/or
(b) the salt is an aluminum salt, ammonium salt, calcium salt, ferrous salt, ferric salt, hydrogen salt, magnesium salt, potassium salt, sodium salt, chloride salt, sulfate salt, hydrogen sulfate salt, sulfite salt, hydrogen sulfite salt, carbonate salt, hydrogen carbonate salt, bicarbonate salt, acetate salt, lactic acid ion salt, hydroxide salt, phosphate salt, hydrogen phosphate salt, dihydrogen phosphate salt, nitrate salt, nitrite salt, formate salt, citrate salt, amide salt, oxalate salt, malonic acid ion salt, chloride salt, tartrate ion salt, ascorbate ion salt, glutamic acid ion salt, lysine acid ion salt, serine acid ion salt, glutamate ion salt, glutamine acid ion salt, alanine acid ion salt, phenylalanine acid ion salt, valine acid ion salt, leucine acid ion salt, isoleucine acid ion salt, histidine acid ion salt, arginine acid ion salt, tyrosine acid ion salt, threonine acid ion salt, cysteine acid ion salt, methionine acid ion salt, tryptophan acid ion salt, proline acid ion salt, selenocysteine acid ion salt, succinate ion salt, aspartic acid salt, glycolate ion salt or salycilate ion salt, optionally
wherein the salt is an ammonium salt, a potassium salt or a glutamic acid ion salt, for example an ammonium citrate salt, potassium citrate salt or glutamic acid monosodium salt, optionally wherein the ammonium citrate salt is an ammonium citrate di-basic salt; and/or
(c) the composition further comprises an acid, optionally wherein the acid is:

an organic acid, for example oxalic acid, dipicolinic acid, citric acid, trimesic acid, aconitic acid, phosphoric acid, benzoic acid, sorbic acid, acetic acid, lactic acid, ascorbic acid, glutamic acid, glycine, serine, phosphoric acid, aconitic acid, tartaric acid, succinic acid, malonic acid or malic acid, optionally citric acid.

**8.** The composition of claim 7, wherein the entomopathogenic fungus is:

*Beauveria bassiana,* optionally strain ATCC 74040, strain GHA (Accession No. ATCC74250), strain ATP02 (Accession No. DSM 24665), strain PPRI 5339, strain PPRI 7315, strain R444, strains IL197, IL12, IL236, IL10, IL131, IL116, strain Bv025, strain BaGPK, strain ICPE 279, strain CG 716, strain HF23, strain ANT-03, strain NPP111B00, strain 203, strain Bb10, strain ESALQ PL63, strain IMI389521, strain IBCB 66, strain K4B1, strain

K4B3, or strain CBMAI 1306; or
*Metarhizium brunneum* (formely known as *Metarhizium anisopliae*), optionally strain Cb15, strain ESALQ 1037, strain E-9, strain M206077, strain C4-B (NRRL 30905), strain ESC1, strain 15013-1 (NRRL 67073), strain 3213-1 (NRRL 67074), strain C20091, strain C20092, strain F52 (DSM3884/ ATCC 90448, IDAC Accession No. IMI 507278), strain ICIPE 78, strain ESF1, strain IBCB 425 or strain LRC112
*Cordyceps fumosorosea,* optionally strain IF-BDC01, strain FE 9901 / ARSEF 4490, strain ESALQ1296 or strain CCM 8367; or
*Cordyceps javanica,* optionally strain Apopka 97, strain GF 511 (IDAC Accession No. 080621-01), wf GA17, strain GZQ-1, strain IjH6102, strain pf185, strain pf212, strain JZ-7, or strain IJNL-N8 / CCTCC M-2017709; or
*Isaria farinosa,* optionally strain ESALQ 1205.

**9.** The composition of claim 7 or 8, wherein the entomopathogenic fungus is:

*Cordyceps javanica* Apopka 97, optionally wherein the salt is an ammonium citrate salt, potassium citrate salt or glutamic acid monosodium salt; or
*Cordyceps javanica* GF 511 (IDAC Accession number 080621-01), optionally wherein the salt is glutamic acid monosodium salt.

**10.** The preparation of any one of claims 1 to 6 or the composition of any one of claims 7 to 9, comprising at least one further component, wherein the further component is one or more liquids for spore formulations, an oil, antioxidant, emulsifier, or rheology modifier, one or more other components being present in a fungal spore formulation, or one or more impurities which can be found in water.

**11.** Use of a salt as defined in any one of claims 3, 6, 7 or 9 for increasing the efficacy of entomopathogenic fungal spores as defined in any one of claims 2 or 5 to 9 to control insects and/or nematodes.

**12.** A method for enhancing the efficacy of fungal spores comprising contacting spores of an entomopathogenic fungus as defined in any one of claims 2 or 5 to 9 with a salt as defined in any one of claims 3, 6, 7 or 9.

**13.** A method for controlling insects and/or nematodes, in or on a plant, for enhancing growth of a plant or for increasing plant yield or root health comprising applying an effective amount of a preparation according to any one of claims 1 to 6 or a composition according to any one of claims 7 to 9 to said plant or to a locus where plants are growing or intended to be grown.

**14.** The use of claim 11 or the method of claim 12 or 13 wherein the entomopathogenic fungus is:

*Cordyceps javanica* Apopka 97 and the salt is an ammonium citrate salt, potassium citrate salt or glutamic acid monosodium salt, wherein the composition increases white fly mortality; and/or
*Cordycepsjavanica* GF 511 (IDAC Accession number 080621-01) and the salt is an ammonium citrate salt, potassium citrate salt or glutamic acid monosodium salt, wherein the composition increases white fly mortality.

**15.** The method of any one of claims 12 to 14, wherein the amount of preparation or composition is at least 0,05 l/ha.

**16.** A kit comprising spores of an entomopathogenic fungus as defined in any one of claims 2 or 5 to 9 and a salt as defined in any one of claims 3, 6, 7 or 9, wherein the entomopathogenic fungi and the salt are spatially separated, optionally wherein:

said kit is suitable for preparation of a composition according to any one of claims 7 to 9; and/or
said kit further comprises a description of how to prepare a composition according to any one of claims 7 to 9.

Europäisches Patentamt
European Patent Office
Office européen des brevets

# EUROPEAN SEARCH REPORT

Application Number
EP 23 18 0715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2023/111330 A1 (DANSTAR FERMENT AG [CH]) 22 June 2023 (2023-06-22) * claims 1-39 * * examples 1-8 * | 1-16 | INV. A01N63/30 A01P5/00 A01P7/04 A01N37/36 A01N37/44 |
| E | US 2023/232837 A1 (WOLF ARITE [DE] ET AL) 27 July 2023 (2023-07-27) * tables 1,2 * | 1-16 | |
| X | WO 2020/226482 A1 (LAI HONG HENG [MY]) 12 November 2020 (2020-11-12) * claims 1-34 * | 1-16 | |
| X | Sabbour M M: "The role of chemical additives in enhancing the efficacy of Beauveria bassiana and Metarhizium anisopliae against the potato tuber moth Phthorimaea operculella (Zeller) (Lepitdoptera:Gelechiidae)", Pakistan Journal of Biological Sciences, 1 January 2002 (2002-01-01), pages 1155-1159, XP055920918, Retrieved from the Internet: URL:https://docsdrive.com/pdfs/ansinet/pjbs/2002/1155-1159.pdf [retrieved on 2022-05-13] * abstract * * tables 1,2 * | 1-16 | TECHNICAL FIELDS SEARCHED (IPC) A01N A01P |
| X | CN 108 703 154 A (CHONGQING JULIXIN BIOLOGICAL ENG CO LTD) 26 October 2018 (2018-10-26) * abstract * * examples 1-14 * * tables 1-6 * * claims 1-9 * | 1-16 | |

-/--

The present search report has been drawn up for all claims

1

| Place of search | Date of completion of the search | Examiner |
|---|---|---|
| Munich | 22 November 2023 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 18 0715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZUREK LUDEK ET AL: "Synergism between Metarhizium anisopliae (Deuteromycota: Hyphomycetes) and Boric Acid against the German Cockroach (Dictyoptera: Blattellidae)", BIOLOGICAL CONTROL, vol. 23, no. 3, 1 March 2002 (2002-03-01), pages 296-302, XP055921027, US ISSN: 1049-9644, DOI: 10.1006/bcon.2001.1012 Retrieved from the Internet: URL:https://www.sciencedirect.com/science/article/pii/S1049964401910126/pdf?md5=bafcd6c083ce8cc5ce4f7e4b9ceb6ef3&pid=1-s2.0-S1049964401910126-main.pdf> * abstract * * table 2 * * page 301, last paragraph * ----- | 1-16 | |
| X | SRIKANTH J ET AL: "Effect of Media Additives on the Production of, an Entomopathogenic Fungus of", SUGAR TECH ; AN INTERNATIONAL JOURNAL OF SUGAR CROPS AND RELATED INDUSTRIES, SPRINGER-VERLAG, INDIA, vol. 14, no. 3, 17 May 2012 (2012-05-17), pages 284-290, XP035085240, ISSN: 0974-0740, DOI: 10.1007/S12355-012-0152-2 * abstract * * table 1 * * page 285, paragraph "Fungal Culture and Media" * * page 285, paragraph "Evaluation of Additives" * ----- -/-- | 1-16 | TECHNICAL FIELDS SEARCHED (IPC) |

The present search report has been drawn up for all claims

1

| Place of search | Date of completion of the search | Examiner |
|---|---|---|
| Munich | 22 November 2023 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 18 0715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BIDOCHKA MICHAEL J. ET AL: "The implication of metabolic acids produced by Beauveria bassiana in pathogenesis of the migratory grasshopper, Melanoplus sanguinipes", JOURNAL OF INVERTEBRATE PATHOLOGY, vol. 58, no. 1, 1 July 1991 (1991-07-01), pages 106-117, XP055921017, US ISSN: 0022-2011, DOI: 10.1016/0022-2011(91)90168-P Retrieved from the Internet: URL:https://www.sciencedirect.com/science/article/pii/002220119190168P/pdf?md5=f4386c66424515283efd57bc7c17acf4&pid=1-s2.0-002220119190168P-main.pdf> * abstract * * figures 1-2,4 * | 1-16 | |
| X | FR 2 202 159 A1 (AGRONOMIQUE INST NAT RECH [FR]) 3 May 1974 (1974-05-03) * claims 1-13 * | 1-16 | TECHNICAL FIELDS SEARCHED (IPC) |
| X | US 2022/312776 A1 (LANVER DANIEL [DE] ET AL) 6 October 2022 (2022-10-06) * claim 6 * * paragraph [0021] * | 1-16 | |
| X | WO 2015/130911 A1 (ENVERA LLC [US]) 3 September 2015 (2015-09-03) * claims 1-33 * | 1-16 | |

-/--

The present search report has been drawn up for all claims

1

| Place of search | Date of completion of the search | Examiner |
|---|---|---|
| Munich | 22 November 2023 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 18 0715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | .: "Tableaux de compatibilité pour les mélanges en réservoir avec BioCeres WP", , 3 November 2020 (2020-11-03), pages 1-3, XP055921038, Canada Retrieved from the Internet: URL:https://anatisbioprotection.com/assets/docs/en/compatibility-table-bioceres.pdf [retrieved on 2022-05-13] * tables * ----- | 1-16 | |
| X | US 2022/015355 A1 (GAERTZEN OLIVER [DE] ET AL) 20 January 2022 (2022-01-20) * claim 20 * * paragraph [0100] * ----- | 1-16 | |
| X | CN 110 226 607 A (INST PLANT PROT SHANDONG ACADEMY AGRICULTURAL SCIENCES) 13 September 2019 (2019-09-13) * claims 1-9 * ----- | 1-16 | TECHNICAL FIELDS SEARCHED (IPC) |
| X | CN 115 851 453 A (INSTITUTE OF FOREST ECOLOGY ENVIRONMENT AND NATURAL PROT CHINESE ACADE) 28 March 2023 (2023-03-28) * claims 1-10 * ----- | 1-16 | |
| X | WO 2008/062413 A2 (MITAM LTD [IL]; MAOR PESAH [IL] ET AL.) 29 May 2008 (2008-05-29) * claims 1-59 * ----- | 1-16 | |
| X | CN 113 243 392 A (UNIV JILIN) 13 August 2021 (2021-08-13) * examples 1-8 * * claims 1-7 * ----- | 1-16 | |

-/--

1

The present search report has been drawn up for all claims

| Place of search | Date of completion of the search | Examiner |
|---|---|---|
| Munich | 22 November 2023 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 18 0715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 378 582 A (UNIV NANJING FORESTRY) 7 July 2020 (2020-07-07) * claims 1-10 * * examples 1-6 * * effect examples 1-2 * ----- | 1-16 | |
| X | CN 107 779 408 A (PLANT PROT INSTITUTE PPI OF HEBEI ACADEMY OF AGRICULTURAL AND FORESTRY) 9 March 2018 (2018-03-09) * claim 5 * ----- | 1-16 | |

TECHNICAL FIELDS SEARCHED (IPC)

The present search report has been drawn up for all claims

1

| Place of search | Date of completion of the search | Examiner |
|---|---|---|
| Munich | 22 November 2023 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 18 0715

This annex lists the patent family members relating to the patent documents cited in the above-mentioned European search report. The members are as contained in the European Patent Office EDP file on
The European Patent Office is in no way liable for these particulars which are merely given for the purpose of information.

22-11-2023

| Patent document cited in search report | Publication date | Patent family member(s) | Publication date |
|---|---|---|---|
| WO 2023111330 A1 | 22-06-2023 | NONE | |
| US 2023232837 A1 | 27-07-2023 | BR 112022024480 A2 | 27-12-2022 |
| | | CA 3184174 A1 | 16-12-2021 |
| | | EP 4161275 A1 | 12-04-2023 |
| | | US 2023232837 A1 | 27-07-2023 |
| | | WO 2021249972 A1 | 16-12-2021 |
| WO 2020226482 A1 | 12-11-2020 | NONE | |
| CN 108703154 A | 26-10-2018 | NONE | |
| FR 2202159 A1 | 03-05-1974 | NONE | |
| US 2022312776 A1 | 06-10-2022 | AR 119103 A1 | 24-11-2021 |
| | | EP 3979803 A1 | 13-04-2022 |
| | | IL 288656 A | 01-02-2022 |
| | | US 2022312776 A1 | 06-10-2022 |
| | | WO 2020245154 A1 | 10-12-2020 |
| WO 2015130911 A1 | 03-09-2015 | NONE | |
| US 2022015355 A1 | 20-01-2022 | AR 117608 A1 | 18-08-2021 |
| | | AU 2019300109 A1 | 21-01-2021 |
| | | BR 112021000324 A2 | 06-04-2021 |
| | | CN 112423584 A | 26-02-2021 |
| | | EP 3820287 A1 | 19-05-2021 |
| | | JP 2021525545 A | 27-09-2021 |
| | | PH 12021550057 A1 | 27-09-2021 |
| | | US 2022015355 A1 | 20-01-2022 |
| | | WO 2020011819 A1 | 16-01-2020 |
| CN 110226607 A | 13-09-2019 | NONE | |
| CN 115851453 A | 28-03-2023 | NONE | |
| WO 2008062413 A2 | 29-05-2008 | AU 2007323077 A1 | 29-05-2008 |
| | | BR PI0719014 A2 | 29-10-2013 |
| | | EP 2083632 A2 | 05-08-2009 |
| | | US 2010112060 A1 | 06-05-2010 |
| | | WO 2008062413 A2 | 29-05-2008 |
| CN 113243392 A | 13-08-2021 | NONE | |
| CN 111378582 A | 07-07-2020 | NONE | |

EPO FORM P0459

For more details about this annex : see Official Journal of the European Patent Office, No. 12/82

# ANNEX TO THE EUROPEAN SEARCH REPORT ON EUROPEAN PATENT APPLICATION NO.

EP 23 18 0715

This annex lists the patent family members relating to the patent documents cited in the above-mentioned European search report. The members are as contained in the European Patent Office EDP file on
The European Patent Office is in no way liable for these particulars which are merely given for the purpose of information.

22-11-2023

| Patent document cited in search report | Publication date | Patent family member(s) | Publication date |
| --- | --- | --- | --- |
| CN 107779408 A | 09-03-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2022086495 W
- WO 2010006563 A
- CN 111961598 A


### Non-patent literature cited in the description


- **WU et al.** *Environmental Tolerance of Entomopathogenic Fungi: A New Strain of Cordyceps javanica Isolated from a Whitefly Epizootic Versus Commercial Fungal Strains*, 2020
- **OU et al.** *Identification of a new Cordyceps javanica fungus isolate and its toxicity evaluation against Asian citrus psyllid*, 2019
- **BOCCO et al.** *Endophytic Isaria javanica pf185 Persists after Spraying and Controls Myzus persicae (Hemiptera: Aphididae) and Colletotrichum acutatum (Glomerellales: Glomerellaceae) in Pepper*, 2021
- **SUN et al.** *The roles of entomopathogenic fungal infection of viruliferous whiteflies in controlling tomato yellow leaf curl virus*, 2021
- **ZHAO et al.** *Sustainable control of the rice pest, Nilaparvata lugens, using the entomopathogenic fungus Isariajavanica*, 2020
- **JARONSKI**. *Use of Entomopathogenic Fungi in Biological Pest Management*, 2007, ISBN 978-81-308-0192-6
- **AVERY et al.** Field Efficacy of Cordyceps javanica, White Oil and Spinetoram for the Management of the Asian Citrus Psyllid. *Diaphorina citri Insects*, 2021, vol. 12, 824
- **W. NOLL**. Chemie und Technologie der Silicone. Verlag Chemie, 1968
- **B. MARCINIEC**. Appl. Homogeneous Catal. Organomet. Compd.. 1996, vol. 1, 487
- *CHEMICAL ABSTRACTS*, 27306-78-1
- *CHEMICAL ABSTRACTS*, 134180-76-0
- *CHEMICAL ABSTRACTS*, 67674-67-3
- **MASCARIN et al.** The virulence of entomopathogenic fungi against Bemisia tabaci biotype B (Hemiptera: Aleyrodidae) and their conidial production using solid substrate fermentation. *Biological Control*, 2013, https://doi.org/10.1016/j.biocontrol.2013.05.001
- Mass Production of Entomopathogenic Fungi: State of the Art. **JARONSKI et al.** Mass Production of Beneficial Organisms. 2007
- **ABBOTT**. A Method of Computing the Effectiveness of an Insecticide. *Journal of Economic Entomology*, 1925, https://doi.org/10.1093/jee/18.2265a
- **COLBY**. Calculating Synergistic and Antagonistic Responses of Herbicide Combinations. *Weeds*, 1967, https://doi.org/10.2307/4041058